(19) Europäisches Patentamt
European Patent Office
Office européen des brevets

(11) **EP 3 020 769 A1**

(12) **DEMANDE DE BREVET EUROPEEN**

(43) Date de publication:
**18.05.2016 Bulletin 2016/20**

(51) Int Cl.:
*C09C 1/02* (2006.01)    *C09C 3/06* (2006.01)

(21) Numéro de dépôt: **15003384.3**

(22) Date de dépôt: **24.12.1999**

(84) Etats contractants désignés:
**AT BE CH CY DE DK ES FI FR GB GR IE IT LI LU MC NL PT SE**
Etats d'extension désignés:
**RO SI**

(30) Priorité: **24.12.1998 FR 9816596**

(62) Numéro(s) de document de la (des) demande(s) initiale(s) en application de l'article 76 CBE:
**99959625.7 / 1 149 136**

(71) Demandeur: **Omya International AG**
**4665 Oftringen (CH)**

(72) Inventeurs:
• **Gane, Patrick, A.C.**
**4852 Rothrist (CH)**

• **Buri, Matthias**
**CH-4852 Rothrist (CH)**
• **Blum, René, Vinzenz**
**CH-4915 St. Urban (CH)**
• **Karth, Beat**
**CH-3363 Oberoenz (CH)**

(74) Mandataire: **Richebourg, Michel François**
**Cabinet Michel Richebourg**
**"Le Clos du Golf"**
**69, rue Saint-Simon**
**42000 Saint Etienne (FR)**

Remarques:
Cette demande a été déposée le 27-11-2015 comme demande divisionnaire de la demande mentionnée sous le code INID 62.

(54) **NOUVELLE CHARGE OU PIGMENT OU MINERAL TRAITÉ POUR PAPIER, NOTAMMENT PIGMENT CONTENANT DU CACO3 NATUREL, SON PROCÉDÉ DE FABRICATION, COMPOSITIONS LES CONTENANT, ET LEURS APPLICATIONS**

(57) L'invention concerne un pigment, une charge ou un minéral contenant un carbonate de calcium naturel, traité avec un ou plusieurs donneurs d'ions $H_3O^+$ et du $CO_2$ gazeux, permettant la réduction du poids du papier à surface constante, sans perte des propriétés physiques lorsqu'il est utilisé comme pigment de masse ou de couchage pour ledit papier.

En particulier, l'invention concerne un pigment, une charge ou un minéral contenant un carbonate de calcium naturel, ou la dolomie, ou des mélanges talc-carbonate de calcium, kaolin-carbonate de calcium seul ou en combinaison avec des fibres naturelles et/ou synthétiques et analogues, traités par un ou plusieurs donneurs d'ions $H_3O^+$ moyennement forts à forts en présence de gaz $CO_2$. Applications notamment papetières, avec obtention en particulier de bonnes propriétés de la feuille, c'est à dire une réduction de son poids pour une épaisseur donnée.

FIGURE 1

échantillon de l'invention (A)

l'échantillon de l'art antérieur (B)

**Description**

La présente invention concerne le secteur technique des charges minérales, notamment pour les applications papetières, et leurs améliorations par des traitements appropriés afin d'améliorer soit le procédé de fabrication de la feuille de papier, soit ses propriétés.

De telles charges sont bien connues de l'homme du métier, et l'on citera par exemple le carbonate de calcium naturel, le carbonate de calcium synthétique ou "précipité" ("PCC"), et diverses charges comme la dolomie, les charges mixtes à base de carbonates de divers métaux comme notamment le calcium associé au magnésium, et analogues, diverses charges comme le talc ou analogues, et les mélanges de ces charges entre elles, comme par exemple les mélanges talc-carbonate de calcium, carbonate de calcium-kaolin, ou encore les mélanges carbonate de calcium naturel avec l'hydroxyde d'aluminium, le mica ou encore avec des fibres synthétiques ou naturelles.

Il sera également inutile de détailler le procédé de fabrication d'un feuille de papier, carton ou analogue. L'homme du métier sait que l'on forme une pâte ("pulp") qui comprend essentiellement des fibres (fibres cellulosiques d'origine naturelle - comme les bois résineux ou feuillus - ou synthétique ou en mélanges), une charge telle que définie ci-dessus, et une proportion appropriée d'eau.

On forme généralement une pâte épaisse ou "thick stock" que l'on dilue par de l'eau en une pâte diluée ou "thin stock". Cette pâte subit divers ajouts d'additifs, comme divers polymères, afin d'améliorer les conditions de floculation et donc de "formation" de la feuille, de rétention de la charge, et de drainage de l'eau sous la toile. Le milieu aqueux, contenant une fraction de la charge initiale, qui est drainé, sous dépression, sous la toile est dénommé "eaux blanches". La feuille est ensuite soumise à divers traitements, dont une opération importante qui est dénommée couchage. Pendant cette opération de couchage, il est connu qu'il existe des pertes de sauce de couchage et de papier couché. Ce papier couché est recyclé en charge de masse et est dénommé "cassé du couchage".

L'invention concerne tout particulièrement le traitement, par une combinaison d'un ou plusieurs donneurs d'ions $H_3O^+$ moyennement forts à forts et un milieu gazeux actif, de pigments, charges ou minéraux, en suspension aqueuse, contenant un carbonate naturel, tels qu'un carbonate de calcium naturel, ou tout pigment contenant du carbonate de calcium naturel en combinaison avec d'autres minéraux. En effet il est logique que le carbonate de calcium naturel puisse être mélangés avec des minéraux inertes vis à vis des donneurs d'ions $H_3O^+$ moyennement forts à forts bien connus dans la papeterie.

Les applications de l'invention sont notamment papetières, avec obtention en particulier de propriétés égales ou meilleures de la feuille, et notamment d'opacité et de blancheur, mais une réduction de son poids pour une épaisseur donnée. Cette réduction du poids du papier à épaisseur constante de la feuille avec conservation ou amélioration des propriétés de la feuille sera appelée propriété de "bulk" dans la suite de la présente demande.

Une application particulière et intéressante de l'invention concerne, à titre naturellement non limitatif, l'amélioration des propriétés lors d'une impression digitale comme une impression par jet d'encre sur du papier non couché mais chargé avec le pigment traité selon l'invention ou encore sur du papier traité en surface ou encore couché par la mise en oeuvre de pigments selon l'invention.

Dans ce domaine particulier de l'impression au jet d'encre, mais non limitatif, l'invention concerne des compositions dont la charge présente simultanément une caractéristique de granulométrie élevée, plus grossière et une surface spécifique élevée.

Une autre application particulière de l'invention est le domaine des peintures.

Ainsi, le but principal de l'invention est de réduire le poids du papier pour une dimension donnée tout en maintenant identiques voire en améliorant les propriétés dudit papier.

La réduction du poids du papier pour une épaisseur donnée est très intéressante pour des raisons de transport et notamment de coût de frais postaux ainsi que pour des raisons d'environnement à savoir notamment d'économie de matériaux naturels et de ressources énergétiques.

Ainsi le brevet WO 92/06038, dont le but est d'améliorer l'opacité et la blancheur du papier contenant l'agent de "bulk" dans la feuille, ou bien couché avec une sauce contenant un tel agent, propose une solution qui ne permet pas d'économies énergétiques.

Les propriétés d'opacité et de meilleure blancheur sont obtenues par un processus très complexe qui intervient lors de la formation de la feuille de papier. Comme on le sait, la feuille se forme sur la toile par une floculation ou agglomération ou entrelacement des divers constituants de la pâte, et notamment au niveau des fibres ou de leurs fibrilles. Cette "agglomération" est favorisée par le drainage de l'eau qui est aspirée sous la toile. Certains de ces phénomènes physico-chimiques peuvent déjà apparaître, notamment, au niveau de la caisse de tête ou "headbox", ou du moins certaines transformations ou interactions peuvent déjà y apparaître, qui favoriseront telle ou telle propriété sur la toile et au delà.

Sans vouloir être liée par une quelconque théorie, le Demandeur considère que la charge, selon le traitement qu'elle a ou non subi, va interagir différemment avec les fibrilles et les fibres. L'invention repose sur un traitement particulier qui, dans ce contexte, conduit à une propriété de "bulk" c'est-à-dire une bonne interaction avec le réseau de fibres.. Comme indiqué également dans le document WO92/06038, le "bulk" se traduit par une meilleure dispersion de la lumière par la feuille.

Le problème est cependant compliqué par le fait qu'une solution pour obtenir du "bulk",qui est d'augmenter le volume de pores internes du papier (WO96/32449, page 2 lignes 15 ff.), retarde le drainage de l'eau et retarde donc le processus de fabrication du papier, alors que la tendance va vers des machines de plus en plus rapides.

L'invention améliore également fortement la propriété finale d'abrasivité du pigment pendant la fabrication du papier, c'est-à-dire permet de diminuer l'abrasion du tamis métallique ou polymère mis en oeuvre et d'abrasivité du pigment pendant le couchage du papier, c'est-à-dire permet de diminuer l'abrasion de la lame utilisée. Le brevet WO 96/32449 souligne l'importance de cette propriété, en indiquant que le pigment $TiO_2$ est un bon agent de "bulk", mais est trop abrasif, page 1 ligne 35 ff. (et, de plus, coûteux).

Enfin, la présente invention apporte également la possibilité de maintenir la rigidité du papier à poids réduit de papier dans des applications spécifiques comme la fabrication d'enveloppes.

Comme indiqué plus haut, et comme confirmé en détail dans les brevets WO96/32448 et WO 96/32449, on connaît deux types principaux de carbonate de calcium, l'un naturel et l'autre synthétique.

Le carbonate de calcium synthétique ou "PCC" est obtenu de manière connue par une réaction de chaux vive ou calcinée (éteinte) sur du $CO_2$ ; on obtient alors un carbonate de calcium synthétique qui, selon les conditions de la réaction, se présente sous diverses formes telles que des aiguilles, ou d'autres formes de cristaux. Il existe de nombreux brevets traitant de la synthèse du PCC.

A titre purement documentaire, le brevet USP 5,364,610 décrit un procédé de fabrication de carbonate de calcium pour obtenir un PCC en formes scalenohedriques. Il décrit comme art antérieur des procédés d'obtention par carbonatation au $CO_2$. Le PCC est présenté comme conférant au papier de meilleures propriétés, notamment de blancheur. Nous citerons également le brevet USP 5,075,093.

Il est également bien connu que le PCC peut donner du "bulk" incluant les interactions qui affaiblissent le réseau de fibres. Le brevet WO93/06038 précité décrit d'ailleurs un procédé de carbonation de la chaux pour obtenir un PCC possédant des propriétés de "bulk".

Par contre, le carbonate naturel ne donne pas cette propriété alors qu'il serait évidemment très intéressant de l'obtenir, sans que l'industrie soit obligée d'employer un carbonate synthétique

Il existe donc un besoin important visant à obtenir, à partir des carbonates naturels, des propriétés de "bulk" ou des interactions favorables aux propriétés de surface. De plus, il a été tout à fait surprenant, du fait que le PCC a une interaction défavorable pour la force du réseau de fibres, que le nouveau pigment, selon l'invention, ne donne pas seulement les mêmes propriétés que le PCC mais conserve également les propriétés avantageuses du carbonate de calcium naturel.

De manière surprenante, il a été mis au point le pigment aux propriétés synergiques idéales.

Divers traitements ont déjà été proposés par l'industrie considérée.

Le brevet WO 96/32448 décrit un procédé de traitement de la dispersion de carbonate de calcium (désignée par le terme "slurry" dans l'industrie considérée), à faible concentration de carbonate (1 à 30% de matières solides), par du polyDIMDAC (diméthyldiallyl ammonium homopolymère) qui est un agent d'agrégation cationique de bas poids moléculaire de 10 000 à 500 000 pour obtenir du " bulk ". Ce brevet utilise aussi bien le PCC que du carbonate naturel broyé, connu sous le vocable G(N)CC ("ground natural calcium carbonate"), ou encore leurs mélanges. Ce procédé est principalement une floculation, une agrégation des petites particules sur les plus grosses et la propriété d'interaction avec les fibres est principalement obtenue par la granulométrie uniquement grossière des particules. Les propriétés physiques du papier sont alors défavorablement affectées lorsque son poids est diminué.

Le brevet WO 96/32449 décrit sensiblement le même enseignement. Le but est d'obtenir l'agrégation sélective de particules fines et ultra-fines, au moyen d'un agent d'agrégation présentant une charge opposée à la charge globale de la charge.

Le brevet USP 4,367,207, cité dans le brevet WO 92/06038, décrit un procédé de traitement de $CaCO_3$ par le $CO_2$ en présence d'un électrolyte de type organopolyphosphonate anionique, mais le but est seulement d'obtenir un slurry de carbonate finement divisé.

Le brevet EP 0 406 662 décrit un procédé de fabrication de carbonate synthétique selon lequel on effectue un prémélange de $CaCO_3$ de type aragonite avec de la chaux, puis on ajoute à ce slurry un "dérivé d'acide phosphorique" comme l'acide phosphorique ou ses sels, ou divers phosphates, cf. page 4 lignes 17 ff., et enfin on introduit du $CO_2$ pour réaliser la carbonatation classique. Le but de ce brevet est d'obtenir spécifiquement un PCC de dimension de particule importante et de forme cristalline particulière (aciculaire), que l'on ne savait pas produire industriellement. Ce brevet cite comme art antérieur d'autres brevets concernant le procédé de fabrication de PCC par carbonatation, comme des améliorations consistant à introduire le $CO_2$ par étapes successives ou l'ajout avant la réaction de centres de nucléation correspondant à le forme cristalline recherchée.

L'acide phosphorique est utilisé dans ce brevet EP 0 406 662 afin de former, page 4 lignes 46 ff., spécifiquement la forme aragonite via un composé non identifié du type "phosphoric acid calcium" qui sert de nouveaux centres de nucléation pour la forme cristalline recherchée (ligne 52, ligne 55).

Les applications du carbonate obtenu sont indiquées page 5 lignes 2 ff. Entres autres propriétés isolantes et analogues, le carbonate est utile dans l'industrie papetière pour permettre l'incorporation de quantités supérieures de matière minérale dans le papier, ce qui conduit à des papiers d'intérieur incombustibles. Aucune propriété comme l'opacité du papier, sa brillance, ou le "bulk", ne sont mentionnées dans ce brevet, dont ce n'est clairement pas l'objet. Le seul exemple d'application concerne d'ailleurs une composition carbonate / résine.

On connaît également des procédés pour conférer des propriétés particulières au carbonate.

On citera entre autres l'obtention de propriétés de résistance aux acides, qui sont utiles lorsque le carbonate est utilisé comme charge dans un processus de fabrication de papier par voie acide, qui est l'une des voies papetières classiques. Ainsi, le brevet USP 5,043, 017 décrit la stabilisation du carbonate de calcium, et en particulier du PCC (col. 1 ligne 27), par l'action d'un agent chélatant du calcium, comme l'hexamétaphosphate de calcium, et d'une base conjuguée qui peut être un sel de métal alcalin d'acide faible (phosphorique, citrique, borique, acétique, ...). Ce document renvoie à de l'art antérieur dans lequel l'hexamétaphosphate de sodium est utilisé comme dispersant, où selon lequel un sel d'acide faible est utilisé après la carbonatation "primaire", dans la production de PCC, ou bien au contraire dans la première étape de la production. Ce document cite également le brevet USP 4,219,590, qui décrit un procédé pour améliorer le carbonate de calcium sec par un traitement par un "gaz acide, anhydride, totalement sec". Il s'agit en fait dans ce document d'améliorer le traitement de surface déjà connu, qui était effectué par un acide gras, ou une résine acide, et analogues (col. 1 ligne 17). Ce document traite le carbonate par des vapeurs d'ébullition d'acide phosphorique, chlorhydrique, nitrique, caprique, acrylique, ou de chlorures ou fluorures d'aluminium, ou d'acides fumarique, etc.... . Le but est de faire éclater les particules de carbonate en fines particules (col. 2 lignes 65 ff). Le document préconise l'emploi de HF, SO2, ou anhydride phosphorique, et le seul exemple est dirigé vers l'emploi de HF ou de tétrachlorure de titane (ce dernier améliorant l'opacité du papier, cf. col 3 lignes 12 ff).

On connaît également le brevet USP 5,230,734 qui utilise le $CO_2$ pour produire un carbonate de Ca-Mg.

Le brevet WO 97/08247 décrit une formulation de carbonate également pour papier obtenu par une voie faiblement acide. Le carbonate est traité par un mélange de base faible et d'acide faible, parmi lesquels l'acide phosphorique, l'un des deux agents devant être dérivé d'un acide organique.

Le brevet WO 97/14847 décrit également un carbonate résistant aux acides, pour le papier, et qui est traité par un mélange de deux acides faibles pour "inactiver" la surface du carbonate.

Le brevet WO 98/20079 décrit également un procédé pour rendre un carbonate résistant aux acides, et en particulier un PCC, par l'ajout de silicate de calcium et d'un acide faible ou d'un alun. Ce document cite comme art antérieur le brevet USP 5,164,006 qui utilise un traitement par le $CO_2$ pour obtenir des propriétés de résistance au milieu acide. Cependant, l'addition de produits comme le chlorure de Zn sont alors nécessaires, alors qu'ils ne répondent pas aux normes d'environnement. En outre, le pigment selon l'invention n'est pas résistant aux acides et sa réactivité, inattenduement positive, permet d'obtenir une bonne interaction avec les fibres.

L'industrie considérée a donc cherché, depuis des décennies, à améliorer les propriétés du carbonate naturel et / ou à produire des carbonates synthétiques PCC présentant des propriétés spécifiques. Parmi ces recherches, figurent certaines tentatives concernant le "bulk", mais on note qu'aucune ne fait référence à l'emploi du $CO_2$. Ce gaz est réservé aux traitements visant à conférer des propriétés antiacide, sans aucun rapport avec le "bulk", ou à la production du PCC par carbonatation. On a également associé l'acide phosphorique et le $CO_2$, mais seulement pour améliorer la production de PCC.

En fait, compte-tenu des meilleures propriétés conférées par le PCC, l'industrie a surtout cherché à produire des carbonates synthétiques présentant des propriétés de plus en plus améliorées. Un mérite de l'invention est d'avoir cherché à travailler sur la base des carbonates naturels.

L'invention concerne donc la mise au point de nouvelles suspensions aqueuses d'un ou plusieurs pigments, charges ou minéraux contenant éventuellement un agent polymère dispersant comme stabilisant de rhéologie de la suspension, ces dits pigments permettant la réduction en poids du papier à surface constante.

Ces nouvelles suspensions aqueuses sont caractérisées en ce que :

a) elles contiennent un carbonate naturel et le ou les produits de réaction dudit carbonate avec du $CO_2$ gazeux et le ou les produits de réaction dudit carbonate avec un ou plusieurs donneurs d'ions $H_3O^+$ moyennement forts à forts et

b) elles ont un pH supérieur à 7,5 mesuré à 20°C.

Elles sont aussi caractérisées en ce que le pigment, la charge ou le minéral a une surface spécifique BET, mesurée selon la norme ISO 9277, comprise entre 5 $m^1$/g et 200 $m^2$/g, préférentiellement entre 20 $m^2$/g et 80 $m^2$/g et très préférentiellement entre 30 $m^2$/g et 60$m^2$/g.

De manière particulière, les suspensions aqueuses selon l'invention sont caractérisées en ce que le pigment, la charge ou le minéral présente les caractéristiques suivantes :

- un diamètre moyen de grain, mesuré par la méthode par sédimentation sur appareil Sedigraph 5100™ compris entre 50 et 0,1 micromètre
- et une surface spécifique BET, mesurée selon la norme ISO 9277, comprise entre 15 et 200 $m^2/g$.

De manière encore plus particulière elles sont caractérisées en ce que le pigment, la charge ou le minéral présente les caractéristiques suivantes :

- un diamètre moyen de grain, mesuré par la méthode par sédimentation sur appareil Sedigraph 5100™ compris entre 25 et 0,5 micromètre, et encore plus particulièrement entre 7 et 0,7 micromètre
- et une surface spécifique BET, mesurée selon la norme ISO 9277, comprise entre 20 et 80 $m^2/g$ et encore plus particulièrement entre 30 et 60 $m^2/g$.

L'invention concerne en outre les pigments ou charges à l'état sec tels qu'un carbonate de calcium naturel ou tout pigment contenant du carbonate de calcium naturel, obtenus par séchage des suspensions aqueuses selon l'invention, ce séchage étant réalisé par la mise en oeuvre des moyens de séchage bien connus de l'homme du métier.

L'invention concerne également le traitement de pigments ou charges, en suspension aqueuse, telles qu'un carbonate de calcium naturel, ou tout pigment contenant du carbonate de calcium naturel, ou leurs mélanges y compris avec d'autres charges et pigments ne contenant pas d'ions carbonate, les compositions les contenant et leurs applications papetières, notamment pour obtenir une bonne propriété de bulk et les papiers ainsi chargés ou couchés.

Plus précisément, l'invention concerne une suspension aqueuse de pigments charges ou minéraux pouvant contenir un agent polymère dispersant comme stabilisant de rhéologie de la suspension et comprenant un carbonate naturel, tel que par exemple le carbonate de calcium naturel ou la dolomie, traité en combinaison par un ou plusieurs donneurs d'ions $H_3O^+$ moyennement forts à forts, et du $CO_2$ gazeux.

On citera à titre d'exemples les différents carbonates naturels obtenus à partir de craie, notamment craie de Champagne, de calcite ou de marbre, et leurs mélanges avec du talc, du kaolin et/ou la dolomie, et/ou les hydroxydes d'aluminium, et/ou l'oxyde de titane, l'oxyde de magnésium, et les oxydes et hydroxydes analogues connus dans l'industrie en cause.

Dans la présente demande, ces différentes charges et mélanges de charges ou charges mixtes seront regroupées par commodité sous le vocable général de "charges" sauf lorsque la mention d'une charge ou d'une catégorie de charges plus précise sera nécessaire.

L'acide utilisé sera tout acide moyennement fort à fort, ou tout mélange de tels acides, générant des ions $H_3O^+$ dans les conditions du traitement.

Selon un mode de réalisation également préféré, l'acide fort sera choisi parmi les acides ayant un pKa inférieur ou égal à zéro à 22°C et plus particulièrement choisi parmi l'acide sulfurique, l'acide chlorhydrique ou leurs mélanges.

Selon un mode de réalisation également préféré, l'acide moyennement fort sera choisi parmi les acides ayant un pKa compris entre 0 et 2,5 inclus à 22°C et plus particulièrement choisi parmi $H_2SO_3$, $HSO_4^-$, $H_3PO_4$, l'acide oxalique ou leurs mélanges. On peut citer, notamment par exemple, le pKa1 de $H_3PO_4$ égal à 2,161 (Römpp Chemie, Edition Thieme).

Selon un mode de réalisation également préféré, le ou les acides moyennement forts pourront être mélangés à l'acide ou aux acides moyennement forts.

Selon l'invention, la quantité en mole de donneurs d'ions $H_3O^+$ moyennement forts à forts par rapport au nombre de moles de $CaCO_3$ est au total comprise entre 0,1 et 2, préférentiellement entre 0,25 et 1.

Selon l'invention, le procédé de traitement de pigments, charges ou minéraux, en suspension aqueuse, contenant un carbonate naturel, se caractérise en ce que ledit pigment est traité par une combinaison d'un ou plusieurs donneurs d'ions $H_3O^+$ moyennement forts à forts et du $CO_2$ gazeux.

De manière préférée ce procédé de traitement, selon l'invention de pigments, charges ou minéraux, en suspension aqueuse, contenant un carbonate naturel permettant la réduction en poids du papier à surface constante se caractérise en ce qu' il est constitué des 3 étapes suivantes :

a) Le traitement avec le ou les donneurs d'ions $H_3O^+$ moyennement forts à forts
b) Le traitement avec le $CO_2$ gazeux, que ce traitement soit partie intégrante de l'étape a), qu'il soit effectué parallèlement à l'étape a) ou qu'il soit effectué après l'étape a)
c) La remontée du pH, mesuré à 20°C, au delà de 7,5, dans un intervalle de temps après la fin des étapes a) et b) compris entre 1 heure et 10 heures, préférentiellement entre 1 heure et 5 heures sans l'ajout d'une base, ou immédiatement après la fin des étapes a) et b) avec l'ajout d'une base, l'étape c) étant la dernière étape du procédé.

De manière encore préférée, le $CO_2$ gazeux provient d'une alimentation externe en $CO_2$ ou bien d'une recirculation du $CO_2$ ou bien de l'ajout en continu du même donneur d'ions $H_3O^+$ moyennement fort à fort que celui ayant servi à l'étape a) du traitement ou encore d'un autre donneur d'ions $H_3O^+$ moyennement fort à fort, ou encore d'une surpression en $CO_2$, et préférentiellement d'une surpression comprise entre 0,05 bar et 5 bars. A ce propos, il est à noter que la cuve de traitement, remplie de charges ayant un poids spécifique de l'ordre de 1 à 2, peut atteindre une hauteur de par exemple 20 mètres, et de ce fait créer une surpression en $CO_2$ pouvant atteindre plusieurs bars et notamment pouvant aller jusqu'à 5 bars environ au fond de la cuve ou dans une cuve fermée.

Selon un mode de réalisation préférée, les étapes a) et b) peuvent être répétées plusieurs fois.

De même selon un mode de réalisation préféré, le pH, mesuré à 20°C, est compris entre 3 et 7,5 pendant les étapes a) et b) du traitement et la température du traitement est comprise entre 5°C et 90°C, et préférentiellement entre 45°C et 60°C.

Selon encore un mode de réalisation préféré, entre une heure et dix heures et plus particulièrement entre une heure et cinq heures après la fin du traitement, le pH est supérieur à 7.5 à température ambiante, et cela sans l'ajout d'une quelconque base. Si une quelconque base est ajoutée, le pH monte alors immédiatement. De plus, il est à noter qu'après plusieurs jours aucune résistance aux acides n'est observée.

Le procédé de traitement de pigments, charges ou minéraux, en suspension aqueuse, contenant un carbonate naturel permettant la réduction en poids du papier à surface constante selon l'invention, se caractérise en ce que la concentration en $CO_2$ gazeux dans la suspension est, en volume, telle que le rapport (volume de la suspension : volume de $CO_2$ gazeux) est compris entre 1 : 0,05 et 1 : 20 avec ledit rapport compris entre 1 : 1 et 1 : 20 dans l'étape a) et entre 1 : 0,05 et 1 : 1 dans l'étape b).

De manière tout à fait préférée, la concentration en $CO_2$ gazeux dans la suspension est, en volume, telle que le rapport (volume de la suspension : volume de $CO_2$ gazeux) est compris entre 1 : 0,05 et 1 : 5 avec ledit rapport compris entre 1 : 0,5 et 1 : 10 dans l'étape a) et entre 1 : 0,05 et 1 : 1 dans l'étape b).

Le $CO_2$ gazeux peut être dosé sous forme liquide ou anhydre.

De manière également préférée, la durée de l'étape b) du traitement dure de 0 heure à 10 heures et préférentiellement de 2 heures à 6 heures.

Le procédé de traitement, selon l'invention, est mis en oeuvre en phase aqueuse (slurry) à des concentrations en matière sèche faibles, moyennement fortes ou fortes, mais peut être aussi mis en oeuvre pour des mélanges de slurries constituées de ces différentes concentrations. De manière préférentielle, la teneur en matière sèche est comprise entre 1 % et 80 % en poids.

Sans vouloir être lié par une quelconque théorie, le Demandeur pense que le $CO_2$ gazeux joue, entre autre, le rôle d'un régulateur de pH et d'un régulateur de l'adsorption / désorption.

Selon un mode de l'invention, le procédé de fabrication de la suspension aqueuse selon l'invention se caractérise en ce que, après les trois étapes du procédé de traitement de l'invention, le produit traité est mis en suspension aqueuse à l'aide d'un agent dispersant et éventuellement reconcentré.

La suspension aqueuse de charge obtenue selon l'invention peut être incorporée dans le processus de fabrication de la feuille de papier, carton ou analogue au niveau de la préparation de la pâte épaisse, ou de la pâte diluée, ou à ces deux niveaux en fonction du processus papetier. La charge est en fait introduite en une ou plusieurs fois selon les recommandations habituelles des papetiers.

La charge traitée selon l'invention présente également un grand intérêt après la formation de la feuille, et l'on peut notamment incorporer la charge selon l'invention dans les eaux blanches recyclées, ou dans les "cassés de couchage" également recyclés.

Alternativement, on peut également appliquer le traitement selon l'invention aux eaux blanches ou aux "cassés de couchage" recyclés ; on traite alors le milieu recyclé selon les étapes du procédé selon l'invention, comme indiqué ci-dessus.

L'invention s'applique à la fabrication de papier obtenu à base de fibres de cellulose d'origine bois, comme à base de bois feuillus ou de bois résineux.

L'invention s'applique également au papier obtenu à partir de fibres ne provenant pas du bois mais au contraire de fibres synthétiques.

L'invention concerne donc également les procédés de fabrication du papier, carton ou analogues ainsi modifiés pour intégrer le procédé selon l'invention.

L'invention concerne également les produits nouveaux obtenus par le procédé qui vient d'être décrit.

Les exemples suivants illustrent l'invention sans toutefois en limiter la portée.

On a effectué une série d'essais pour des slurries de faible teneur en matières solides, c'est-à-dire de l'ordre de 30% maximum, et une autre série d'essais pour des slurries de teneur élevée en matières solides, c'est à dire jusqu'à environ 80%.

Les teneurs élevées présentent un grand intérêt dans l'industrie considérée, mais posent des problèmes particuliers de viscosité. Il faut alors souvent mais de manière facultative, adjoindre un dispersant qui peut présenter des inconvénients dans le processus (interférence du dispersant par des réactions concurrentes au niveau des phénomènes d'adsorption sur la surface du carbonate ou des autres types de charges).

**Exemple 1 :**

Cet exemple illustre l'invention et concerne le traitement de slurries de faible teneur en matières sèches.

Pour ce faire, dans tous les essais de l'exemple 1 concernant les suspensions aqueuses à faible teneur en matière sèche, on prépare le $CaCO_3$ ou le mélange de minéraux contenant du carbonate de calcium, sous la forme d'une suspension ("slurry") dont la teneur en matière solide ou sèche varie entre 5% et 30% en poids, ou sous la forme d'un gâteau de filtration, ou sous la forme d'une poudre sèche, dans un réacteur approprié et, si cela est nécessaire, on dilue jusqu'à la teneur souhaitée en matières solides par de l'eau déminéralisée ou de l'eau du robinet.

Pour l'essai relatif à la suspension aqueuse à teneur moyennement forte en matière sèche, on prépare le $CaCO_3$, sous la forme d'une suspension ("slurry") dont la teneur en matière solide ou sèche est de l'ordre de 45% en poids.

Pour tous les essais, on utilise un réacteur en verre de 1 litre ou 10 litres ou un conteneur en plastique de 100 litres ou une citerne de 40 $m^3$ comportant un agitateur du type rotor/stator ainsi qu'un agitateur à haute vitesse comportant un disque rotatif de diamètre 50 mm pour les réacteurs de 1 litre et 10 litres ou 200 mm pour le conteneur en plastique de 100 litres ou 1500 mm pour la citerne de 40$m^3$.

Pour certains essais qui seront précisés dans la suite des exemples, il est mis en oeuvre un mélangeur à lit fluidisé de 6 litres ou de 600 litres du type Lödige.

Après un mélange homogène, on règle la suspension ou slurry à la température correspondant à l'essai.

Ensuite, on ajoute un donneur d'ions $H_3O^+$ moyennement fort à fort, préférablement choisi parmi $H_2SO_3$, $HSO_4^-$, $H_3PO_4$, l'acide oxalique ou leurs mélanges sous la forme d'une solution de concentration comprise entre 1 % et 85% en poids, durant un laps de temps spécifique. Les déviations sont décrites ci-dessous.
On ajoute ou introduit le $CO_2$ par le fond du récipient ou à l'aide d'une canne plongeante du haut vers le bas du récipient, durant la période de temps qui est indiquée ci-dessous.

Le témoin est un papier fabriqué en parallèle de la même façon, avec la même quantité de charge non traitée à 75 g/$m^2$ et avec le même batch de cellulose.

Essai n° 1

On dilue 5 kg, calculé en pigment sec, de carbonate de calcium naturel de type marbre norvégien, de granulométrie telle que 75 % en poids des particules ont un diamètre inférieur à 1 $\mu$m, mesurée au moyen du Sedigraph 5100 de la société Micromeritics, sous forme de gâteau de filtration, jusqu'à l'obtention d'un slurry d'une concentration en matière sèche de 10 % en poids, par de l'eau distillée, dans le conteneur de 100 litres. Puis on traite le slurry ainsi formé au moyen d'acide sulfurique en solution à 10 % en poids correspondant à 0,20 mole de $H_3O^+$ par mole de $CaCO_3$, à 20°C et sous agitation pendant 2 minutes à 500 tours par minute. Après 15 minutes, on fait barboter du $CO_2$ avec une surpression de 50mbar au travers de la suspension de carbonate de calcium durant 5 heures, de telle sorte que le rapport volume de la suspension : volume de $CO_2$ gazeux soit égal à environ 1 : 0,15.
Après 24 heures de stockage, on forme les feuilles de papier contenant, comme charge, la suspension de carbonate de calcium à tester.

Pour ce faire, on réalise les feuilles de papier à partir d'une pulpe ou pâte de cellulose de degré SR 23 contenant une pâte au sulfate de bois et des fibres constituées à 80 % de bouleau et 20 % de pin. On dilue alors 45 g sec de cette pulpe ou pâte dans 10 litres d'eau en présence de environ 15 g sec de la composition de charges à tester pour obtenir expérimentalement une teneur en charge de 20 % à 0,5 % près. Après 15 minutes d'agitation et l'ajout de 0,06 % en poids sec par rapport au poids sec de papier, d'un agent rétenteur du type polyacrylamide, on forme une feuille de grammage égal à 75 g/$m^2$ et chargée à (20 $\pm$ 0,5 %). Le dispositif mis en oeuvre pour former la feuille est un système Rapid-Köthen modèle 20.12 MC de la Société Haage.

Les feuilles ainsi formées sont séchées pendant 400 secondes à 92°C et un vide de 940 mbar. La teneur en charge est contrôlée par analyse des cendres.

La feuille ainsi formée, on en mesure l'épaisseur.

L'épaisseur du papier ou de la feuille de carton représente la distance perpendiculaire entre les deux surfaces parallèles.

Les échantillons sont conditionnés durant 48 heures (norme allemande DIN EN 20187).

Cette norme précise que le papier est une substance hygroscopique et, en tant que telle, présente la caractéristique d'être capable d'adapter sa teneur en humidité afin de la rendre appropriée par rapport à celle de l'air environnant. L'humidité est absorbée lorsque l'air ambiant subit une augmentation d'humidité et est au contraire évacuée lorsque l'air ambiant subit une diminution d'humidité.

Même si l'humidité relative reste à un niveau constant, la teneur en humidité du papier ne reste pas nécessairement égale si la température n'est pas maintenue constante dans certaines limites. Lors d'une augmentation ou d'une diminution de la teneur en humidité, les propriétés physiques du papier sont modifiées.

Pour cette raison, on doit conditionner les échantillons durant au moins une période de 48 heures, jusqu'à ce que l'on atteigne un équilibre. Les échantillons sont également testés sous des conditions climatiques identiques. Le climat d'essai pour le papier a été établi de manière à correspondre aux données suivantes :

Humidité relative 50 % ($\pm$ 3)
Température 23°C ($\pm$ 1)

L'épaisseur est déterminée selon la norme allemande DIN EN 20534 en utilisant un micromètre dont l'impression d'essai ("test print") s'élève à 10 n/cm². Le résultat d'essai est déterminé par un calcul de moyenne sur 10 mesures. Le résultat est exprimé en micromètres.

Le témoin est un papier fabriqué en parallèle de la même façon, avec la mème quantité de charge, mais non traitée, à 75 g/m² et avec le même batch de cellulose.

Les résultats sont :

a) Pour le pigment
5 heures après la fin du traitement du carbonate de calcium naturel de l'essai, le pH du slurry est 7,6 ce qui signifie aucune stabilité envers les acides.

b) Pour le papier
les mesures d'épaisseur sont :

- Pour l'échantillon de départ, témoin: 112 $\mu$m à 75 g/m².
- Pour l'échantillon d'essai: 120 $\mu$m à 75 g/m², ce qui ramené à une valeur d'épaisseur de 112 $\mu$m donne 70 g/m².

On voit que dans cet essai, si l'on ramène l'épaisseur du papier à une valeur commune de 112 $\mu$m, on gagne 5 g/m² ou 6,6 % du poids du papier ce qui signifie une économie importante en terme d'environnement.

Essai n° 2 :

On traite, dans le réacteur 10 litres en verre et sous agitation, 3 kg calculé en pigment sec de gâteau de filtration de type marbre norvégien, de granulométrie telle que 75 % en poids des particules ont un diamètre inférieur à 1 $\mu$m, mesurée au moyen du Sedigraph 5100 de la société Micromeritics sous forme d'un slurry à une concentration en matière sèche de 10 % en poids et à une température de 20°C, au moyen d'acide phosphorique en solution à 10 % en poids correspondant à 0,15 mole de $H_3O^+$ par mole de $CaCO^3$. Ensuite, on fait barboter dans le slurry, du $CO_2$ avec une surpression d'environ 100 mbar, durant 5 heures, de telle sorte que le rapport volume de la suspension : volume de $CO_2$ gazeux soit égal à environ 1 : 0,1. Immédiatement après production, aussi bien que après 1 heure, 2 heures, 3 heures, 4 heures et 5 heures, on mesure la valeur du pH. On forme des feuilles à partir du slurry à faible teneur en matière sèche. Avec 0,53 % en poids par rapport au poids de pigment sec, d'un agent dispersant de type polyacrylate de sodium, de viscosité spécifique de 0.75, il a été possible de monter la concentration en matière sèche à une valeur de 47 % en poids.

La viscosité spécifique des agents dispersants anioniques, dans les exemples, et qui porte comme symbole la lettre grecque "Eta", est déterminée de la manière suivante : une solution du polymère est réalisée, neutralisée à 100 % par une solution d'hydroxyde de sodium (pH 9) pour la mesure, par dissolution de 50 g, par rapport au polymère sec, dans 1 litre, d'eau distillée contenant 60 g de NaCl. Ensuite, avec un viscosimètre capillaire présentant une constante Baumé de 0,000105 dans un bain chauffant thermostabilisé à 25°C, le temps qui est nécessaire pour qu'un volume exactement défini de la solution de polymère alcaline s'écoule au travers du capillaire est mesuré et est comparé avec le temps durant lequel le même volume de la solution à 60 g de NaCl/litre passe au travers du capillaire.

Il est possible de définir la viscosité spécifique "Eta" de la manière suivante :

$$\text{Eta} = \frac{\text{ps de passage de la solution de polymère - temps de passage de la solution de NaCl}}{\text{temps de passage de la solution de NaCl}}$$

Les meilleurs résultats sont obtenus si le diamètre du capillaire est choisi de telle façon que le temps requis par la solution de polymère moins le temps requis par la solution ne contenant que du NaCl se trouve entre 90 et 100 secondes.

Après 24 heures de stockage, les feuilles de papier sont formées, avec le même mode opératoire que dans l'essai n° 1, à 75 g/m² et on en mesure l'épaisseur, également avec la même méthode que l'essai n° 1.

Les résultats sont :

a) Pour le pigment :

3 heures après la fin du traitement du carbonate de calcium naturel de l'essai, le pH du slurry est 7,5 ce qui signifie aucune stabilité envers les acides.

b) Pour le papier :

les mesures d'épaisseur sont :

- Pour l'échantillon de départ, témoin (charge non traitée): 113 $\mu$m à 75 g/m$^2$.
- Pour l'échantillon d'essai: 123 $\mu$m à 75 g/m$^2$, ce qui ramené à une valeur d'épaisseur de 113 $\mu$m donne 68,9 g/m$^2$.

On voit que dans cet essai, si l'on ramène l'épaisseur du papier à une valeur commune de 113 $\mu$m, on gagne 6,1 g/m$^2$ ou 8,8 % du poids du papier ce qui signifie une économie importante en terme d'environnement.

On procède également aux mesures d'opacité et de blancheur des feuilles précédemment formées.

L'opacité est mesurée comme étant l'indice de la translucence du papier, sur les feuilles, au moyen d'un spectrophotomètre de type Data Color Elrepho 2000 selon la norme DIN 53 146.

La blancheur du papier est mesurée selon la norme ISO dénomée Brightness R 457, sur le filtre Tappi, en utilisant de la lumière ultraviolette, au moyen d'un spectrophotomètre de type Data Color Elrepho 2000. La mesure est effectuée sur une pile de 10 feuilles afin d'éviter l'influence de la translucence.

Les résultats obtenus par le mode opératoire décrit ci-dessus sont :

- Blancheur de l'échantillon de l'essai selon l'invention : 89,6
- Opacité de l'échantillon de l'essai selon l'invention : 89,4
- Blancheur de l'échantillon témoin (non traité) : 88,4
- Opacité de l'échantillon témoin (non traité) : 86,4

Essai n° 3 :

On traite, dans le réacteur de verre, 75 g calculé en pigment sec de gâteau de filtration de type marbre norvégien, de granulométrie telle que 75 % en poids des particules ont un diamètre inférieur à 1 $\mu$m, mesurée au moyen du Sedigraph 5100 de la société Micromeritics, sous forme d'un slurry à une concentration en matière sèche de 10 % en poids et à une température de 20°C, au moyen d'acide phosphorique en solution à 10 % en poids correspondant à 0,25 mole de $H_3O^+$ par mole de $CaCO_3$. Ensuite, on fait barboter du $CO_2$ sous pression atmosphérique au travers du slurry durant 5 heures, de telle sorte que le rapport volume de la suspension : volume de $CO_2$ gazeux soit égal à environ 1 : 0,05.

Après 24 heures de stockage, les feuilles de papier sont formées, avec le même mode opératoire que dans l'essai n° 1, à 75 g/m$^2$ et on en mesure l'épaisseur, également avec la même méthode que l'essai n° 1.

Les résultats sont :

a) Pour le pigment :

5 heures après la fin du traitement du carbonate de calcium naturel de l'essai, le pH du slurry est 7,7 ce qui signifie aucune stabilité envers les acides.

b) Pour le papier :

les mesures d'épaisseur sont :

- Pour l'échantillon de départ, témoin (charge non traitée): 113 $\mu$m à 75 g/m$^2$.
- Pour l'échantillon d'essai: 119 $\mu$m à 75 g/m$^2$, ce qui ramené à une valeur d'épaisseur de 113 $\mu$m donne 71,1 g/m$^2$.

On voit que dans cet essai, si l'on ramène l'épaisseur du papier à une valeur commune de 113 $\mu$m, on gagne 3,9 g/ m$^2$ ou 5,2 % du poids du papier ce qui signifie une économie importante en terme d'environnement.

Essai n° 4 :

On traite 1 kg calculé en pigment sec de carbonate de calcium de type marbre finlandais, de granulométrie telle que 63 % en poids des particules ont un diamètre inférieur à 1 $\mu$m, mesurée au moyen du Sedigraph 5100 de la société Micromeritics, broyé en voie humide à 75 % de concentration en matière sèche par la mise en oeuvre de 0.55 % en poids d'un polyacrylate de sodium ayant une viscosité spécifique de 0.54, dilué à une concentration du slurry en matière sèche de 45 % en poids et à une température de 20°C, au moyen d'acide phosphorique en solution à 10 % en poids correspondant à 0,15 mole de $H_3O^+$ par mole de $CaCO_3$. Ensuite, on fait barboter du $CO_2$ avec une surpression d'environ 100 mbar dans le slurry et durant 5 heures, de telle sorte que le rapport volume de la suspension : volume de $CO_2$ gazeux soit égal à 1 : 0,1.

Le produit est tamisé et après 24 heures de stockage, l'on forme des feuilles, avec le même mode opératoire que dans l'essai n° 1, à 75 g/m². On en mesure l'épaisseur, également avec la même méthode que l'essai n° 1, les résultats étant ensuite comparés par rapport à l'emploi du produit carbonate de calcium non traité de granulométrie telle que 63 % en poids des particules ont un diamètre inférieur à 1 $\mu$m, mesurée au moyen du Sedigraph 5100 de la société Micromeritics.

Les résultats sont :

a) Pour le pigment

2 heures après la fin du traitement du carbonate de calcium naturel de l'essai, le pH du slurry est 7,6 ce qui signifie aucune stabilité envers les acides.

b) Pour le papier

les mesures d'épaisseur sont :

- Pour l'échantillon de départ, témoin (charge non traitée): 113 $\mu$m à 75 g/m².
- Pour l'échantillon d'essai: 116 $\mu$m à 75 g/m², ce qui ramené à une valeur d'épaisseur de 113 $\mu$m donne 72,9 g/m².

On voit que dans cet essai, si l'on ramène l'épaisseur du papier à une valeur commune de 113 $\mu$m, on gagne 2,1 g/m² ou 2,8 % du poids du papier ce qui signifie une économie importante en terme d'environnement.

Essai n° 5

On traite, dans le réacteur en verre, 75 g calculé en pigment sec de carbonate de calcium de type marbre norvégien, de granulométrie telle que 75 % en poids des particules ont un diamètre inférieur à 1 $\mu$m, au moyen du Sedigraph 5100 de la société Micromeritics, sous forme d'un slurry à une concentration en matière sèche de 10 % en poids et à une température de 35°C au moyen d'acide phosphorique en solution à 10 % en poids correspondant à 0,15 mole de $H_3O^+$ par mole de $CaCO_3$. Ensuite, on fait barboter du $CO_2$ sous pression atmosphérique au travers du slurry durant 5 heures, de telle sorte que le rapport volume de la suspension : volume de $CO_2$ gazeux soit égal à 1 : 0,05.

Après 24 heures de stockage, les feuilles de papier sont formées, avec le même mode opératoire que dans l'essai n° 1, à 75 g/m² et on en mesure l'épaisseur, également avec la même méthode que l'essai n° 1.

Les résultats sont :

a) Pour le pigment :

5 heures après la fin du traitement du carbonate de calcium naturel de l'essai, le pH du slurry est 7,8 ce qui signifie aucune stabilité envers les acides.

b) Pour le papier :

les mesures d'épaisseur sont :

- Pour l'échantillon de départ, témoin (charge non traitée): 113 $\mu$m à 75 g/m².
- Pour l'échantillon d'essai: 118 $\mu$m à 75 g/m², ce qui ramené à une valeur d'épaisseur de 113 $\mu$m donne 71,8 g/m².

On voit que dans cet essai, si l'on ramène l'épaisseur du papier à une valeur commune de 113 $\mu$m, on gagne 3,2 g/m² ou 4,2 % du poids du papier ce qui signifie une économie importante en terme d'environnement.

Essai n° 6 :

On traite, dans le réacteur en verre, 75 g calculé en pigment sec de carbonate de calcium de type marbre norvégien, de granulométrie telle que 75 % en poids des particules ont un diamètre inférieur à 1 $\mu$m, mesurée au moyen du Sedigraph 5100 de la société Micromeritics, sous forme d'un slurry à une concentration en matière sèche de 10 % en poids et à une température de 45°C, au moyen d'acide phosphorique en solution à 10 % en poids correspondant à 0,30 mole de $H_3O^+$ par mole de $CaCO_3$. Ensuite, on fait barboter du $CO_2$ sous pression atmosphérique dans le slurry durant 5 heures, de telle sorte que le rapport volume de la suspension : volume de $CO_2$ gazeux soit égal à 1 : 0,05.

Après 24 heures de stockage, les feuilles de papier sont formées, avec le même mode opératoire que dans l'essai n° 1, à 75 g/m² et on en mesure l'épaisseur, également avec la même méthode que l'essai n° 1.

Les résultats sont :

a) Pour le pigment :

4 heures après la fin du traitement du carbonate de calcium naturel de l'essai, le pH du slurry est 7,9 ce qui signifie aucune stabilité envers les acides.

b) Pour le papier :

les mesures d'épaisseur sont :

- Pour l'échantillon de départ, témoin (charge non traitée): 113 $\mu$m à 75 g/m².
- Pour l'échantillon d'essai: 118 $\mu$m à 75 g/m², ce qui ramené à une valeur d'épaisseur de 113 $\mu$m donne 71,8 g/m².

On voit que dans cet essai, si l'on ramène l'épaisseur du papier à une valeur commune de 113 $\mu$m, on gagne 3,2 g/m² ou 4,2 % du poids du papier ce qui signifie une économie importante en terme d'environnement.

Essai n° 7 :

On traite, dans le réacteur en verre, 36 g calculé en pigment sec de carbonate de calcium de type marbre finlandais, de granulométrie telle que 65 % en poids des particules ont un diamètre inférieur à 1 $\mu$m, mesurée au moyen du Sedigraph 5100 de la société Micromeritics, à 21,6 % en poids, sous forme d'un slurry à une concentration en matière sèche de 4,8 % en poids(c'est-à-dire plus dilué) et à une température de 35°C, au moyen d'acide phosphorique en solution à 5 % en poids correspondant à 0,32 mole de $H_3O^+$ par mole de $CaCO_3$. Ensuite, on fait barboter du $CO_2$ sous pression atmosphérique dans le slurry durant 5 heures, de telle sorte que le rapport volume de la suspension : volume de $CO_2$ gazeux soit égal à 1 : 0,05.

Après 24 heures de stockage, les feuilles de papier sont formées, avec le même mode opératoire que dans l'essai n° 1, à 75 g/m² et on en mesure l'épaisseur, également avec la même méthode que l'essai n° 1.

Les résultats sont :

a) Pour le pigment :

6 heures après la fin du traitement du carbonate de calcium naturel de l'essai, le pH du slurry est 7,5 ce qui signifie aucune stabilité envers les acides.

b) Pour le papier :

les mesures d'épaisseur sont :

- Pour l'échantillon de départ, témoin (charge non traitée): 113 $\mu$m à 75 g/m².
- Pour l'échantillon d'essai: 121 $\mu$m à 75 g/m², ce qui ramené à une valeur d'épaisseur de 113 $\mu$m donne 70,0 g/m².

On voit que dans cet essai, si l'on ramène l'épaisseur du papier à une valeur commune de 113 $\mu$m, on gagne 5 g/m² ou 6,6 % du poids du papier ce qui signifie une économie importante en terme d'environnement.

Essai n° 8 :

On traite, dans le réacteur en verre, 3750 g calculé en pigment sec de carbonate de calcium de type marbre finlandais, de granulométrie telle que 65 % en poids des particules ont un diamètre inférieur à 1 $\mu$m, mesurée au moyen du Sedigraph 5100 de la société Micromeritics, à 75,0 % en poids, sous forme d'un slurry à une concentration en matière sèche de 20 % en poids et à une température de 60°C, au moyen d'acide phosphorique en solution à 5 % en poids correspondant à 0,5 mole de $H_3O^+$ par mole de $CaCO_3$. Ensuite, on fait barboter du $CO_2$ sous pression atmosphérique dans le slurry durant 2 heures, de telle sorte que le rapport volume de la suspension : volume de $CO_2$ gazeux soit égal à 1 : 0,1.

Après 24 heures de stockage, les feuilles de papier sont formées, avec le même mode opératoire que dans l'essai n° 1, à 75 g/m$^2$ et on en mesure l'épaisseur, également avec la même méthode que l'essai n° 1.

Les résultats sont :

a) Pour le pigment :

6 heures après la fin du traitement du carbonate de calcium naturel de l'essai, le pH du slurry est 7,8 ce qui signifie aucune stabilité envers les acides.

b) Pour le papier :

les mesures d'épaisseur sont :

- Pour l'échantillon de départ, témoin (charge non traitée): 113 $\mu$m à 75 g/m$^2$.
- Pour l'échantillon d'essai: 132 $\mu$m à 75 g/m$^2$, ce qui ramené à une valeur d'épaisseur de 113 $\mu$m donne 64,2 g/m$^2$.

On voit que dans cet essai, si l'on ramène l'épaisseur du papier à une valeur commune de 113 $\mu$m, on gagne 10,8 g/m$^2$ ou 14,4 % du poids du papier ce qui signifie une économie importante en terme d'environnement.

Essai n° 9 :

On traite, dans le réacteur en verre, 36 g calculé en pigment sec de carbonate de calcium de type marbre finlandais, de granulométrie telle que 65 % en poids des particules ont un diamètre inférieur à 1 $\mu$m, mesurée au moyen du Sedigraph 5100 de la société Micromeritics, à 21,6 % en poids, sous forme d'un slurry à une concentration en matière sèche de 4,8 % en poids, mais à une température de 45°C, au moyen d'acide phosphorique en solution à 5 % en poids correspondant à 0,32 mole de $H_3O^+$ par mole de $CaCO_3$. Ensuite, on fait barboter du $CO_2$ sous pression atmosphérique dans le slurry durant 5 heures, de telle sorte que le rapport volume de la suspension : volume de $CO_2$ gazeux soit égal à 1 : 0,05.

Après 24 heures de stockage, les feuilles de papier sont formées, avec le même mode opératoire que dans l'essai n° 1, à 75 g/m$^2$ et on en mesure l'épaisseur, également avec la même méthode que l'essai n° 1.

Les résultats sont :

a) Pour le pigment :

8 heures après la fin du traitement du carbonate de calcium naturel de l'essai, le pH du slurry est 8,1 ce qui signifie aucune stabilité envers les acides.

b) Pour le papier :

les mesures d'épaisseur sont :

- Pour l'échantillon de départ, témoin (charge non traitée): 113 $\mu$m à 75 g/m$^2$.
- Pour l'échantillon d'essai: 126 $\mu$m à 75 g/m$^2$, ce qui ramené à une valeur d'épaisseur de 113 $\mu$m donne 67,1 g/m$^2$.

On voit que dans cet essai, si l'on ramène l'épaisseur du papier à une valeur commune de 113 $\mu$m, on gagne 7,9 g/m$^2$ ou 10,5 % du poids du papier ce qui signifie une économie importante en terme d'environnement.

Une mesure de l'abrasion donne 1,7 mg que l'on doit comparer à la valeur de l'abrasion sur le témoin qui est de 4,5 mg.

Essai n° 10

On traite, dans le réacteur en verre, 36 g calculé en pigment sec de carbonate de calcium de type marbre finlandais, de granulométrie telle que 65 % en poids des particules ont un diamètre inférieur à 1 $\mu$m, mesurée au moyen du Sedigraph 5100 de la société Micromeritics, à 21,6 % en poids, sous forme d'un slurry à une concentration en matière sèche de 4,8 % en poids et à une température, cette fois, de 90°C, au moyen d'acide phosphorique en solution à 5 % en poids correspondant à 0,32 mole de $H_3O^+$ par mole de $CaCO_3$. Ensuite, on fait barboter du $CO_2$ sous pression atmosphérique dans le slurry durant 5 heures, de telle sorte que le rapport volume de la suspension : volume de $CO_2$ gazeux soit égal à 1 : 0,05.

Après 24 heures de stockage, les feuilles de papier sont formées, avec le même mode opératoire que dans l'essai n° 1, à 75 g/m$^2$ et on en mesure l'épaisseur, également avec la même méthode que l'essai n° 1.

Les résultats sont :

a) Pour le pigment :

2 heures après la fin du traitement du carbonate de calcium naturel de l'essai, le pH du slurry est 7,5 ce qui signifie aucune stabilité envers les acides.

b) Pour le papier :

les mesures d'épaisseur sont :

- Pour l'échantillon de départ, témoin (charge non traitée): 113 $\mu$m à 75 g/m$^2$.
- Pour l'échantillon d'essai: 125 $\mu$m à 75 g/m$^2$, ce qui ramené à une valeur d'épaisseur de 113 $\mu$m donne 67,7 g/m$^2$.

On voit que dans cet essai, si l'on ramène l'épaisseur du papier à une valeur commune de 113 $\mu$m, on gagne 7,3 g/m$^2$ ou 9,7 % du poids du papier ce qui signifie une économie importante en terme d'environnement.

Une mesure de l'abrasion, à l'aide de l'appareil Einlehner type 2000, donne 2,0 mg que l'on doit comparer à la valeur de l'abrasion sur le témoin qui est de 4,5 mg.

Les essais ci-dessus montrent que les avantages de l'invention résident dans une diminution du poids pour une épaisseur de feuille identique, et dans une diminution de l'abrasion, ainsi que dans un meilleur lissé pour une meilleure blancheur, et l'on obtient également une meilleure rétention des charges.

Essai n° 11

On traite, dans un réacteur de 40 m$^3$ et d'une hauteur de 12 m, 3600 kg calculé en pigment sec de carbonate de calcium de type marbre de Carrare, de granulométrie telle que 65 % en poids des particules ont un diamètre inférieur à 1 $\mu$m, mesurée au moyen du Sedigraph 5100 de la société Micromeritics, à 28,6 % en poids, sous forme d'un slurry à une concentration en matière sèche de 24,8 % en poids et à une température de 55°C, au moyen d'acide phosphorique en solution à 10 % en poids correspondant à 0,30 mole de $H_3O^+$ par mole de $CaCO_3$. En parallèle de la réaction et ensuite, on fait barboter du $CO_2$ dans le slurry durant 5 heures par recyclage du $CO_2$ interne et injection de $CO_2$ au fond du réacteur sous une surpression de 1,2 bar, de telle sorte que le rapport volume de la suspension : volume de $CO_2$ gazeux soit égal à environ 1 : 5.

Après 24 heures de stockage, les feuilles de papier sont formées, avec le même mode opératoire que dans l'essai n° 1, à 75 g/m$^2$ et on en mesure l'épaisseur, également avec la même méthode que l'essai n° 1.

Les résultats sont :

a) Pour le pigment :

5 heures après la fin du traitement du carbonate de calcium naturel de l'essai, le pH du slurry est 7,7 ce qui signifie aucune stabilité envers les acides.

La surface spécifique BET est de 35,5 m$^2$/g.

Cette mesure de surface spécifique BET est déterminée selon la méthode BET de la norme ISO 9277 à savoir que la mesure s'effectue sous refroidissement à l'azote liquide et sous courant d'azote sur l'échantillon séché jusqu'à poids constant et thermostaté à 250°C pendant une heure sous atmosphère d' azote. Ces conditions seront celle de la norme notamment appelée norme ISO 9277 dans les revendications.

b) Pour le papier :

les mesures d'épaisseur sont :

- Pour l'échantillon de départ, témoin (charge non traitée): 113 $\mu$m à 75 g/m2.
- Pour l'échantillon d'essai: 126 $\mu$m à 75 g/m2, ce qui ramené à une valeur d'épaisseur de 113 $\mu$m donne 67,3 g/m2.

On voit que dans cet essai, si l'on ramène l'épaisseur du papier à une valeur commune de 113 $\mu$m, on gagne 7,7 g/m2 ou 10,3 % du poids du papier ce qui signifie une économie importante en terme d'environnement.

Essai 12 :

Cet essai illustre l'invention et concerne un exemple de couchage à différents grammages sur un support plastique mettant en oeuvre d'une part un slurry de couchage à basse concentration de charges non traitées et d'autre part un slurry à basse concentration de charges traitées selon l'invention.

On a procédé selon le mode opératoire général de l'essai 11 pour traiter le slurry à 17,2 % en sec de carbonate de calcium broyé, avec 0,5 % en poids de dispersant de type polyacrylate, jusqu'à une répartition granulométrique telle que 65 % des particules ont un diamètre inférieur à 1 micromètre mesurée au moyen du Sedigraph 5100 de la société Micromeritics.

Le protocole d'essai du couchage consiste à effectuer le couchage à l'aide d'une coucheuse de type Erichsen Bechcoater™ sur une feuille de matière plastique semi-mate, commercialisée par la société Mühlebach, Suisse.

Les deux sauces de couchages mises en oeuvre ont une composition comprenant 100 part du slurry de pigment à tester et 12 parts de latex de base styrène/acrylate commercialisé par la société BASF sous le nom de ACRONAL S 360 D™.

Pour la première, le slurry de pigment à tester correspond à un slurry de carbonate de calcium non traité à 17,2 % en sec de carbonate de calcium broyé, avec 0,5 % en poids de dispersant de type polyacrylate, jusqu'à une répartition granulométrique telle que 65 % des particules ont un diamètre inférieur à 1 micromètre mesurée au moyen du Sedigraph 5100 de la société Micromeritics. Pour la seconde, le slurry de pigment à tester correspond à un slurry, à 17,2 % en sec de carbonate de calcium, du même carbonate de calcium traité selon le précédent mode opératoire.

Les résultats des mesures d'épaisseur des trois essais correspondant pour l'un au support plastique, pour l'autre au support couché avec le slurry du carbonate de calcium précité non traité et enfin pour le dernier au support couché avec le slurry du carbonate de calcium précité traité, sont rassemblés dans le Tableau et le graphique ci-dessous :

| | Support non couché Epaisseur en microns | Couchage avec CaCO$_3$ non traité Epaisseur en microns | Grammage du couchage g/m2 | Couchage avec CaCO$_3$ traité selon l'invention Epaisseur en microns | Grammage du Couchage : g/m2 |
|---|---|---|---|---|---|
| | 79,59 | | | | |
| Racle 3 | | 81,19 | 4,78 | 95,19 | 4,28 |
| Racle 4 | | 83,19 | 8,44 | 104,1 | 7,09 |
| Racle 5 | | 85,19 | 11,09 | 109,59 | 8,78 |

L'examen du tableau ci-dessus montre que :

- en l'absence de couchage, l'épaisseur du papier est de 79,59,
- avec un couchage classique, l'épaisseur du papier ne s'élève que jusqu'à 81,19 pour un poids de 4,78 g/m2,

avec un couchage par une composition selon l'invention, l'épaisseur du papier progresse très fortement jusqu'à 95,19 pour un poids de 4,28 g/m2.

On obtient naturellement l'épaisseur de couchage par la différence entre l'épaisseur du papier couché et celle du papier non couché.

L'augmentation de l'épaisseur du couchage est donc de 15,6 microns entre le couchage par le produit selon l'invention et le papier non traité (95,19 vs. 79,59), l'épaisseur du papier est de 79,5 pour un poids de 4,28 $g/m^2$ contre seulement 1,6 entre le couchage avec une composition classique et le papier non traité (81,19 vs. 79,59) pour un poids de 4,78 $g/m^2$.

L'augmentation de l'épaisseur (traduit par la propriété dite "bulk") est donc, en utilisant une composition selon la présente invention, environ 10 fois supérieure pour environ le même poids.

Le même type de calcul pour différents poids permet de tracer le graphique suivant épaisseur (micromètre) en fonction du poids ($g/m^2$).

L'interprétation du graphique ci-dessus permet de voir que dans l'essai témoin c'est-à-dire non traitée, la pente de l'épaisseur de couchage est de 0,5 $\mu m.g^{-1}.m^{-2}$ alors que dans l'essai de l'invention, la pente de l'épaisseur de couchage est de 3,5 $\mu m.g^{-1}.m^{-2}$.

On voit que l'on obtiendra donc une bien meilleure couverture ("coverage") de la feuille, une bien meilleure machinabilité ("calendrability") et un volume de pores supérieur, grâce à l'utilisation du produit selon la présente invention.

Essai n° 13 :

Cet essai illustre l'invention et met en oeuvre 150 g sec d'un gateau de filtration de carbonate de calcium de type marbre norvégien, de granulométrie telle que 65 % des particules ont un diamètre inférieur à 1 $\mu m$ déterminée par la mesure Sédigraph 5100, contenant 0,5 % en poids sec d'un polyacrylate de sodium de viscosité spécifique égale à 0,75, qui sont dilués à 20 % avec de l'eau. On prépare alors 1 litre de produit dans un réacteur de verre et on chauffe à 70°C. On ajoute goutte à goutte en 1 heure une quantité d'acide chlorhydrique sous la forme d'une solution aqueuse à 10 % correspondant à 0,507 mole de $H_3O^+$ par mole de $CaCO_3$. Ensuite le produit obtenu est mis à réagir à nouveau durant 30 minutes par recyclage du $CO_2$ interne et injection de $CO_2$ au fond du réacteur, puis on le stocke en position horizontale sur deux cylindres rotatifs, à un pH.de 7,6.

Après 24 heures de stockage, les feuilles de papier sont formées, avec le même mode opératoire que dans l'essai n° 1, à 75 $g/m^2$ puis on en mesure l'épaisseur, également avec la même méthode que l'essai n° 1.

Les résultats sont :

a) Pour le pigment :

5 heures après la fin du traitement du carbonate de calcium naturel de l'essai, le pH du slurry est 7,6 ce qui signifie aucune stabilité envers les acides.

b) Pour le papier :

les mesures d'épaisseur sont :

- Pour l'échantillon de départ, témoin: 114 $\mu$m à 75 g/m$^2$.
- Pour l'échantillon d'essai: 120 $\mu$m à 75 g/m$^2$, ce qui ramené à une valeur d'épaisseur de 114 $\mu$m donne 71,2 g/m$^2$.

On voit que dans cet essai, si l'on ramène l'épaisseur du papier à une valeur commune de 114 $\mu$m, on gagne 3,8 g/m2 ou 5 % du poids du papier ce qui signifie une économie importante en terme d'environnement.

Essai n° 14 :

Cet essai illustre l'invention et met en oeuvre 150 g sec d'un gâteau de filtration de carbonate de calcium de type marbre norvégien, de granulométrie telle que 65 % des particules ont un diamètre inférieur à 1 $\mu$m déterminée par la mesure Sédigraph 5100, contenant 0,5 % en poids sec d'un polyacrylate de sodium de viscosité spécifique égale à 0,75, qui sont dilués à 20 % avec de l'eau. On prépare alors 1 litre de produit dans un réacteur de verre et on chauffe à 70°C. On ajoute goutte à goutte durant 1 heure une quantité d'acide oxalique avec deux moles d'eau cristallisée, (2 H$_2$O), sous la forme d'une solution aqueuse à 10 % correspondant à 0,335 mole de H$_3$O$^+$ par mole de CaCO$_3$. Ensuite, on fait encore réagir le produit durant 30 minutes par recyclage du CO$_2$ interne et injection de CO$_2$ au fond du réacteur et on le stocke en position horizontale sur deux cylindres rotatifs, à un pH de 7,7.
Après 24 heures de stockage, les feuilles de papier sont formées, avec le même mode opératoire que dans l'essai n° 1, à 75 g/m$^2$ puis on en mesure l'épaisseur, également avec la même méthode que l'essai n° 1.
Les résultats sont :

a) Pour le pigment :

5 heures après la fin du traitement du carbonate de calcium naturel de l'essai, le pH du slurry est 8,0 ce qui signifie aucune stabilité envers les acides.

b) Pour le papier :

les mesures d'épaisseur sont :

- Pour l'échantillon de départ, témoin: 114 $\mu$m à 75 g/m$^2$.
- Pour l'échantillon d'essai: 121 $\mu$m à 75 g/m$^2$, ce qui ramené à une valeur d'épaisseur de 114 $\mu$m donne 70,4 g/m$^2$.

On voit que dans cet essai, si l'on ramène l'épaisseur du papier à une valeur commune de 114 $\mu$m, on gagne 4,6 g/m$^2$ ou 6,1 % du poids du papier ce qui signifie une économie importante en terme d'environnement.

**Exemple 2 :**

Cet exemple concerne le traitement de slurries de teneur en matières sèches élevée. Pour ce faire, dans tous les essais de l'exemple 2, on prépare le minéral, sous la forme d'une suspension ("slurry") dont la teneur en matière solide ou sèche peut aller jusqu'à 80 % en poids, ou sous la forme d'un gâteau de filtration, ou sous la forme d'une poudre sèche, dans un réacteur approprié et, si cela est nécessaire, on dilue jusqu'à la teneur souhaitée en matières solides par de l'eau déminéralisée ou de l'eau du robinet.

Essai n° 15 :

Pour cet essai, illustrant l'art antérieur, on réalise la préparation d'une composition aqueuse par l'introduction dans un mélangeur et sous agitation de :

- 750 grammes sec de marbre norvégien de granulométrie telle que 75 % des particules ont un diamètre inférieur à 1 $\mu$m déterminée par la mesure Sédigraph 5100,

- 250 grammes sec d'un talc provenant de Finlande de granulométrie telle que 45 % des particules ont un diamètre inférieur à 2 $\mu$m déterminée par la mesure Sédigraph 5100,

- 5 grammes sec d'un agent liant acrylique composé à 90 % en poids d'acide acrylique et 10 % en poids de méthacrylate de tristyrylphénol à 25 moles d'oxyde d'éthylène

- la quantité d'eau nécessaire à la formation de la composition aqueuse à 65 % de concentration en matière sèche.

Après 30 minutes d'agitation et de formation de la co-structure entre les grains de marbre et de talc à l'aide de l'agent liant, il est ajouté, 5,2 grammes d'un polyacrylate partiellement neutralisé à la soude et de viscosité spécifique égale à 0,5 ainsi que le complément d'eau et de soude pour obtenir une suspension aqueuse à 59,4 % de concentration en matière sèche.

On forme les feuilles à 75 g/m$^2$, avec le même mode opératoire que dans l'essai n° 1, et on en mesure l'épaisseur, également avec la même méthode que l'essai n° 1. L'épaisseur mesurée est de 116 $\mu$m pour un poids de 75 g/m$^2$.

Essai n° 16 :

Pour cet essai, illustrant l'art antérieur, on réalise, avec le même mode opératoire que dans l'essai n° 1, les feuilles de papier de grammage égal à 75 g/m$^2$ à partir d'une suspension aqueuse à 77,5 % de concentration en matière sèche d'un marbre norvégien de granulométrie telle que 63 % des particules ont un diamètre inférieur à 1 $\mu$m déterminée par la mesure Sédigraph 5100.
L'épaisseur mesurée est de 115 $\mu$m pour un poids de 75 g/m$^2$
L'opacité déterminée, selon le même mode opératoire que celui de l'essai n° 2 et selon la norme DIN 53 146, est 86,4.
La blancheur déterminée , selon le même mode opératoire que celui de l'essai n° 2 et selon la norme ISO Brightness R 457 filtre Tappi, est 88,4.

Essai n° 17 :

Pour cet essai, illustrant l'art antérieur, on réalise, avec le même mode opératoire que dans l'essai n° 1, les feuilles de papier de grammage égal à 75 g/m$^2$ à partir d'une suspension aqueuse à 67,2 % de concentration en matière sèche d'un gâteau de filtration de type marbre norvégien, de granulométrie telle que 75 % des particules ont un diamètre inférieur à 1 $\mu$m déterminée par la mesure Sédigraph 5100, contenant 0,5 % en poids sec d'un polyacrylate de sodium de viscosité spécifique égale à 0,75.
L'épaisseur mesurée est de 114 $\mu$m pour un poids de 75 g/m$^2$.

Essai n° 18 :

Pour cet essai, illustrant l'invention, on prépare 4000 g de la composition de l'essai n° 15 qui est un mélange de 25 % en poids sec de talc et de 75 % en poids sec de CaCO$_3$ d'origine marbre norvégien, sous la forme d'une suspension de concentration en matière sèche égale à 59,4 % dans un mélangeur à lit fluidisé (appareil Lödige), et on ajoute goutte à goutte en 45 minutes une quantité d'acide phosphorique, sous la forme d'une solution aqueuse à 20 %, correspondant à 0,15 mole de H$_3$O$^+$ par mole de CaCO$_3$.
Après le traitement, le Lödige continue à tourner pendant une heure Cet appareil à lit fluidisé continuant à tourner permet à l'air d'échanger avec le gaz carbonique produit par la réaction, impliquant ainsi une présence de gaz carbonique dans l'atmosphère de l'appareillage.
Ensuite, le produit obtenu est stocké dans la position horizontale sur deux cylindres rotatifs, à pH 7,6.
Après 24 heures de stockage, les feuilles de papier sont formées, avec le même mode opératoire que dans l'essai n° 1, à 75 g/m$^2$ et on en mesure l'épaisseur, également avec la même méthode que l'essai n° 1.
Les résultats sont :

a) Pour le pigment :
5 heures après la fin du traitement du carbonate de calcium naturel de l'essai, le pH du slurry est 7,8 ce qui signifie aucune stabilité envers les acides.

b) Pour le papier :

les mesures d'épaisseur sont :

- Pour l'échantillon de départ, témoin (essai n° 10): 116 $\mu$m à 75 g/m$^2$.
- Pour l'échantillon d'essai: 118 $\mu$m à 75 g/m$^2$, ce qui ramené à une valeur d'épaisseur de 116 $\mu$m donne

73,9 g/m$^2$.

On voit que dans cet essai, si l'on ramène l'épaisseur du papier à une valeur commune de 116 $\mu$m, on gagne 1,1 g/m$^2$ ou 1,5 % du poids du papier ce qui signifie une économie importante en terme d'environnement.

Essai n° 19 :

Pour cet essai, illustrant l'invention, on prépare 3290 g de la composition de l'essai n° 16, qui est un carbonate de calcium d'origine marbre Norvégien, sous la forme d'un slurry de concentration en matière sèche égale à 75,8 %, dans un mélangeur à lit fluidisé (appareil Lödige) et on ajoute goutte à goutte sur une période de 2 heures une quantité d'acide phosphorique, sous la forme d'une solution aqueuse à 20 %, correspondant à 0,5 mole de H$_3$O$^+$ par mole de CaCO$_3$.
Après le traitement, le Lödige continue à tourner pendant une heure Cet appareil à lit fluidisé continuant à tourner permet à l'air d'échanger avec le gaz carbonique produit par la réaction, impliquant ainsi une présence de gaz carbonique dans l'atmosphère de l'appareillage.
Le produit est ensuite stocké en position horizontale sur deux cylindres rotatifs, à un pH de 7,6.
Après 24 heures de stockage, les feuilles de papier sont formées, avec le même mode opératoire que dans l'essai n° 1, à 75 g/m$^2$ et on en mesure l'épaisseur, également avec la même méthode que l'essai n° 1.
Les résultats sont :

a) Pour le pigment :

7 heures après la fin du traitement du carbonate de calcium naturel de l'essai, le pH du slurry est 7,6 ce qui signifie aucune stabilité envers les acides.

b) Pour le papier :

les mesures d'épaisseur sont :

- Pour l'échantillon de départ, témoin (essai n° 11): 115 $\mu$m à 75 g/m$^2$.
- Pour l'échantillon d'essai: 130 $\mu$m à 75 g/m$^2$, ce qui ramené à une valeur d'épaisseur de 115 $\mu$m donne 66,5 g/m$^2$.

On voit que dans cet essai, si l'on ramène l'épaisseur du papier à une valeur commune de 115 $\mu$m, on gagne 8,5 g/m$^2$ ou 11,3 % du poids du papier ce qui signifie une économie importante en terme d'environnement.

Essai n° 20

Pour cet essai, illustrant l'invention, on cisaille un mélange de 1600 g d' un carbonate de calcium de type marbre norvégien, de granulométrie telle que 75 % des particules ont un diamètre inférieur à 1 $\mu$m déterminée par la mesure Sédigraph 5100, présentant certaines propriétés, à l'état non dispersé, sous la forme d'un gâteau de filtration, avec 400 g d'un autre carbonate différent, obtenu selon l'essai n° 18 ci-dessus, à une concentration en matière sèche de 52,8 % (cf. ci-dessus) dans un appareil à lit fluidisé (appareil Lödige), durant 30 minutes et on disperse après, avec 0,5 % en poids sec d'un dispersant qui est un polyacrylate de sodium de viscosité spécifique égale à 0,75, puis on règle la concentration à 60 %. Ensuite, le produit est stocké en position horizontale sur deux cylindres rotatifs, à un pH de 8,5.
Après 24 heures de stockage, les feuilles de papier sont formées, avec le même mode opératoire que dans l'essai n° 1, à 75 g/m$^2$ puis on en mesure l'épaisseur, également avec la même méthode que l'essai n° 1.
Les résultats sont :

a) Pour le pigment :

5 heures après la fin du traitement du carbonate de calcium naturel de l'essai, le pH du slurry est 8,5 ce qui signifie aucune stabilité envers les acides.

b) Pour le papier
les mesures d'épaisseur sont :

- Pour l'échantillon de départ, témoin (essai n° 17): 114 $\mu$m à 75 g/m$^2$.

- Pour l'échantillon d'essai: 118 $\mu$m à 75 g/m$^2$, ce qui ramené à une valeur d'épaisseur de 114 $\mu$m donne 72,2 g/m$^2$.

On voit que dans cet essai, si l'on ramène l'épaisseur du papier à une valeur commune de 114 $\mu$m, on gagne 2,8 g/m$^2$ ou 3,7 % du poids du papier ce qui signifie une économie importante en terme d'environnement.

Essai n° 21 :

Pour cet essai, illustrant l'invention, on cisaille 1200 g d' un carbonate de calcium de type marbre norvégien, de granulométrie telle que 65 % des particules ont un diamètre inférieur à 1 $\mu$m déterminée par la mesure Sédigraph 5100, à l'état non dispersé, sous la forme d'un gâteau de filtration, avec 300 g d'un autre carbonate traité selon l'essai n° 18 ci-dessus, à une concentration en matière sèche égale à 52,8 %, en présence d'eau, pour obtenir une concentration de 60 %. le cisaillement étant effectué dans un mélangeur à lit fluidisé (appareil Lödige) durant 30 minutes, on ajoute 500 g de talc d'origine finlandaise et de granulométrie telle que 35 % des particules ont un diamètre inférieur à 1 $\mu$m déterminée par la mesure Sédigraph 5100, talc que l'on a préalablement traité avec 1,2 % d'un liant de type copolymère acrylique, et de l'eau, pour obtenir une concentration de 60 %. On cisaille à nouveau durant 30 minutes sous injection de $CO_2$ à un débit de 100ml/min. et ensuite on disperse par 0,5 % en poids sec de polyacrylate de sodium de viscosité spécifique égale à 0,75. Le produit est ensuite stocké en position horizontale sur deux cylindres rotatifs, pH 8,4.
Après 24 heures de stockage, les feuilles de papier sont formées, avec le même mode opératoire que dans l'essai n° 1, à 75 g/m$^2$ puis on en mesure l'épaisseur, également avec la même méthode que l'essai n° 1.
Les résultats sont :

a) Pour le pigment :

5 heures après la fin du traitement du carbonate de calcium naturel de l'essai, le pH du slurry est 8,5 ce qui signifie aucune stabilité envers les acides.

b) Pour le papier :

les mesures d'épaisseur sont :

- Pour l'échantillon de départ, témoin: 114 $\mu$m à 75 g/m$^2$.
- Pour l'échantillon d'essai: 116 $\mu$m à 75 g/m$^2$, ce qui ramené à une valeur d'épaisseur de 114 $\mu$m donne 73,5 g/m$^2$.

On voit que dans cet essai, si l'on ramène l'épaisseur du papier à une valeur commune de 114 $\mu$m, on gagne 1,5 g/m2 ou 2 % du poids du papier ce qui signifie une économie importante en terme d'environnement.

Essai n° 22 :

Pour cet essai, illustrant l'invention, on introduit du $CO_2$ dans le slurry obtenu selon l'essai précédent à un débit de 100ml/min. et durant 5 heures, puis on stocke le produit obtenu dans une position horizontale sur deux cylindres rotatifs, à un pH de 8,1.
Après 24 heures de stockage, les feuilles de papier sont formées, avec le même mode opératoire que dans l'essai n° 1, à 75 g/m$^2$ et on en mesure l'épaisseur, également avec la même méthode que l'essai n° 1.
Les résultats sont :

a) Pour le pigment :

5 heures après la fin du traitement du carbonate de calcium naturel de l'essai, le pH du slurry est 8,1 ce qui signifie aucune stabilité envers les acides.

b) Pour le papier :

les mesures d'épaisseur sont :

- Pour l'échantillon de départ, témoin: 114 $\mu$m à 75 g/m$^2$.
- Pour l'échantillon d'essai: 117 $\mu$m à 75 g/m$^2$, ce qui ramené à une valeur d'épaisseur de 114 $\mu$m donne 73,1 g/m$^2$.

On voit que dans cet essai, si l'on ramène l'épaisseur du papier à une valeur commune de 114 $\mu$m, on gagne 1,9 g/m$^2$ ou 2,5 % du poids du papier ce qui signifie une économie importante en terme d'environnement.

Essai n° 23 :

Pour cet essai, illustrant l'invention, on prépare 6000 g d'un carbonate de calcium d'origine marbre norvégien de granulométrie telle que 65 % des particules ont un diamètre inférieur à 1 $\mu$m déterminée par la mesure Sédigraph 5100, sous la forme d'une dispersion ou slurry de concentration en matière sèche égale à 77,8 %, dans un mélangeur à lit fluidisé (appareil Lödige) et on dilue par de l'eau à 75,7 % de concentration. On ajoute 0,15 mole de $H_3O^+$ par mole de $CaCO_3$, au moyen d'acide phosphorique sous la forme d'une solution aqueuse à 20 %, l'ajout étant effectué goutte à goutte durant 45 minutes.

Ensuite, on fait barboter du $CO_2$, dans le produit, à un débit de 100ml/min. et durant 5 heures, dans le produit puis on stocke le produit obtenu durant d'une part 1 semaine et d'autre part 4 semaines en position horizontale sur deux cylindres rotatifs.

Les résultats sont :

a) Pour le pigment :

3 heures après la fin du traitement du carbonate de calcium naturel de l'essai, le pH du slurry est 7,6, une semaine après il est de 7,8 ainsi que 4 semaines après, ce qui signifie aucune stabilité envers les acides.

b) Pour le papier :

les mesures d'épaisseur sont :

Après le stockage d'une semaine, les feuilles de papier sont formées, avec le même mode opératoire que dans l'essai n° 1, à 75 g/m$^2$ puis on en mesure l'épaisseur, également avec la même méthode que l'essai n° 1.

Les résultats de mesure d'épaisseur sont :

- Pour l'échantillon de départ, témoin: 115 $\mu$m à 75 g/m$^2$.
- Pour l'échantillon d'essai: 119 $\mu$m à 75 g/m$^2$, ce qui ramené à une valeur d'épaisseur de 115 $\mu$m donne 72,2 g/m$^2$.

On voit que dans cet essai, si l'on ramène l'épaisseur du papier à une valeur commune de 115 $\mu$m, on gagne 2,8 g/m$^2$ ou 3,7 % du poids du papier ce qui signifie une économie importante en terme d'environnement.

Après le stockage de 4 semaines, les feuilles de papier sont formées, avec le même mode opératoire que dans l'essai n° 1, à 75 g/m$^2$ puis on en mesure l'épaisseur, également avec la même méthode que l'essai n° 1.

Les résultats de mesure d'épaisseur sont :

- Pour l'échantillon de départ, témoin: 115 $\mu$m à 75 g/m$^2$.
- Pour l'échantillon d'essai: 119 $\mu$m à 75 g/m$^2$, ce qui ramené à une valeur d'épaisseur de 115 $\mu$m donne 72,2 g/m$^2$.

On voit que dans cet essai, si l'on ramène l'épaisseur du papier à une valeur commune de 115 $\mu$m, on gagne 2,8 g/m$^2$ ou 3,7 % du poids du papier ce qui signifie une économie importante en terme d'environnement.

Essai n° 24 :

Cet essai illustre l'invention et la recirculation du gaz carbonique au moyen d'un mélangeur rotor/stator du type Silverson.

Dans une unité pilote de 1 m$^3$ avec une hauteur de 2 m, on a introduit tout d'abord dans un réacteur muni d'une agitation Silverson, 284 litres de slurry à 27 % de concentration en matière sèche de carbonate de calcium naturel d'origine marbre de Carrare de granulométrie telle que 65 % des particules ont un diamètre inférieur à 1 $\mu$m déterminée par la mesure Sédigraph 5100, à 62°C que l'on a dilué avec la quantité d'eau nécessaire pour obtenir une suspension à 23,1 % de concentration en matière sèche, puis on a mélangé avec une quantité de $H_3PO_4$ en solution à 50 % correspondant à 0,26 mole de $H_3O^+$ par mole de $CaCO_3$. La température au début de l'addition de l'acide, qui a duré 1heure 45 minutes, est de 52 °C. Elle s'est effectuée à la main à partir d'un bêcher. La quantité d'eau ajoutée avec l'acide mis en oeuvre nous donne un slurry à 15,8 % de concentration en matière sèche.

Le slurry est alors traité, pendant 4 heures par 60 kg de recirculation de $CO_2$ dans le récipient sous agitation par le Silverson contenant environ 50 litres.

Les résultats sont :

a) Pour le pigment :

5 heures après la fin du traitement du carbonate de calcium naturel de l'essai, le pH du slurry est 7,7 ce qui signifie aucune stabilité envers les acides.

b) Pour le papier :

les mesures d'épaisseur sont :

- Pour l'échantillon de départ, témoin: 117 $\mu$m à 75 g/m$^2$.
- Pour l'échantillon d'essai: 126 $\mu$m à 75 g/m$^2$, ce qui ramené à une valeur d'épaisseur de 117 $\mu$m donne 69,6 g/m$^2$.

On voit que dans cet essai, si l'on ramène l'épaisseur du papier à une valeur commune de 117 $\mu$m, on gagne 5,4 g/m$^2$ ou 7,2 % du poids du papier ce qui signifie une économie importante en terme d'environnement.

Essai n° 25

Cet essai illustre l'invention et le traitement des "cassés de couchage".

Dans ce but, on a dispersé, sous agitation et pendant 30 minutes, dans de l'eau de sorte à obtenir une concentration en "cassés de couchage" de 10 % en poids, 800 grammes de "cassés de couchage" de qualité 100 g/m$^2$ avec un taux de charge d'environ 15 % en poids, correspondant à 120 grammes sec de carbonate de calcium naturel de type marbre finlandais de granulométrie telle que 35 % des particules ont un diamètre inférieur à 1 $\mu$m déterminée par la mesure Sédigraph 5100 et couché à un taux de 25 g/m$^2$ par face, et 400 grammes en poids sec de carbonate de calcium naturel de type marbre finlandais de granulométrie telle que 80 % des particules ont un diamètre inférieur à 1 $\mu$m déterminée par la mesure Sédigraph 5100, ce marbre ayant été broyé à l'aide de la mise en oeuvre de 0,8 % en poids sec d'un polyacrylate de sodium en tant qu' agent dispersant et agent de broyage et d'un latex styrène-butadiène comme liant de couchage.

La dispersion terminée, on traite, dans le réacteur de 10 litres en verre et sous agitation, le slurry à une concentration en matière sèche de 10 % en poids et à une température de 55°C, par une quantité d'acide phosphorique, en solution à 50 % en poids, correspondant à 0,4 mole de $H_3O_+$ par mole de $CaCO_3$. Ensuite, on fait barboter dans le slurry et les fibres, du $CO_2$ sous pression atmosphérique et durant 5 heures, de telle sorte que le rapport volume de la suspension : volume de $CO_2$ gazeux soit égal à 1 : 0,1.

Les feuilles de papier sont fabriquées selon le même mode opératoire que dans les essais précédents en mélangeant les "cassés de couchage" traités avec des fibres fraîches de manière à obtenir un taux de charge de 20 % en poids pour le papier final.

Les résultats sont :

a) Pour le pigment :

5 heures après la fin du traitement du carbonate de calcium naturel de l'essai, le pH du slurry des "cassés de couchage" est 7,6 ce qui signifie aucune stabilité envers les acides.

b) Pour le papier :

les mesures d'épaisseur sont :

- Pour l'échantillon de départ, témoin ( préparé comme l'échantillon sans le traitement par l'acide et le $CO_2$ gazeux) : 115 $\mu$m à 75 g/m$^2$.
- Pour l'échantillon d'essai: 123 $\mu$m à 75 g/m$^2$, ce qui ramené à une valeur d'épaisseur de 115 $\mu$m donne 70,1 g/m$^2$.

On voit que dans cet essai, si l'on ramène l'épaisseur du papier à une valeur commune de 115 $\mu$m, on gagne 4,9 g/m$^2$ ou 6,5 % du poids du papier ce qui signifie une économie importante en terme d'environnement.

Essai n° 26 :

Pour cet essai, illustrant l'invention, on prépare 447 kg de la composition de l'essai n° 16, qui est un carbonate de calcium d'origine marbre norvégien, sous la forme d'un slurry de concentration en matière sèche égale à 75,8 %, dans un mélangeur à lit fluidisé (appareil Lödige) et on ajoute goutte à goutte, sur une période de 2 heures, une quantité d'acide phosphorique, sous la forme d'une solution aqueuse à 20 %, correspondant à 0,3 mole de $H_3O^+$ par mole de $CaCO_3$.

Le traitement à l'acide phosphorique terminé, le produit est stocké pendant 3 heures, période durant laquelle le traitement au $CO_2$ s'effectue par recirculation interne du $CO_2$ gazeux.

Le produit est ensuite stocké en position horizontale sur deux cylindres rotatifs, et le pH est égal à 7,8 après 5 heures.

Après 24 heures de stockage, les feuilles de papier sont formées, avec le même mode opératoire que dans l'essai n° 1, à 75 g/m² mais avec une charge de 25 % de pigment et on en mesure l'épaisseur, également avec la même méthode que l'essai n° 1.

La surface spécifique BET est de 11,5 m²/g, déterminée selon la même méthode que celle de l'essai n° 11.

Les résultats de mesure d'épaisseur sont :

- Pour l'échantillon de départ, témoin (essai n° 13 à une charge de pigment de 25 %): 114 $\mu$m à 75 g/m².
- Pour l'échantillon d'essai: 119 $\mu$m à 75 g/m², ce qui ramené à une valeur d'épaisseur de 114 $\mu$m donne 71,8 g/m²

On voit que dans cet essai, si l'on ramène l'épaisseur du papier à une valeur commune de 114 $\mu$m, on gagne 3,2 g/m² ou 4,3 % du poids du papier ce qui signifie une économie importante en terme d'environnement.

Les résultats de mesure de la longueur de rupture, déterminés selon la norme DIN EN ISO 1924-2 incluant la norme DIN 53112-1 sont :

- Pour l'échantillon de départ, témoin (essai n° 13 à une charge de pigment de 25 %) : 2,22 km
- Pour l'échantillon d'essai à une charge de pigment de 25 % : 2,54 km ce qui signifie un accroissement de la longueur de rupture de 14,4 % par rapport au produit non traité, à 75 g/m².

En outre, la résistance à la traction, déterminée selon la norme DIN EN ISO 1924-2, pour une taille de 15 mm est de 28 N pour l'essai contre seulement 24,5 N pour le témoin.

L'opacité déterminée , selon le même mode opératoire que celui de l'essai n° 2 et selon la norme DIN 53 146, est 86,6.

La blancheur déterminée , selon le même mode opératoire que celui de l'essai n° 2 et selon la norme ISO Brightness R 457 filtre Tappi, est 89,0.

Essai n° 27 :

Pour cet essai, illustrant l'invention, on prépare 447 kg de la composition de l'essai n° 16 mais avec une granulométrie pour laquelle seulement 40 % des particules ont un diamètre inférieur à 1 $\mu$m déterminée par la mesure Sédigraph 5100, sous la forme d'un slurry de carbonate de calcium d'origine marbre norvégien de concentration en matière sèche égale à 75,8 %, dans un mélangeur à lit fluidisé (appareil Lödige) et on ajoute goutte à goutte sur une période de 2 heures 0,3 mole de $H_3O^+$ par mole de $CaCO_3$, au moyen d'acide phosphorique sous la forme d'une solution aqueuse à 20 %.

Le produit est ensuite stocké en position horizontale sur deux cylindres rotatifs, à un pH de 7,6.

Après 24 heures de stockage, les feuilles de papier sont formées, avec le même mode opératoire que dans l'essai n° 1, à 75 g/m² mais avec une charge de 25 % de pigment et on en mesure l'épaisseur, également avec la même méthode que l'essai n° 1.

La surface spécifique BET est de 9,8 m²/g, déterminée selon la même méthode que celle de l'essai n° 11.

Les résultats de mesure d'épaisseur sont :

- Pour l'échantillon de départ, témoin (essai n° 11 à une charge de pigment de 25 %): 114 $\mu$m à 75 g/m².
- Pour l'échantillon d'essai: 121 $\mu$m à 75 g/m², ce qui ramené à une valeur d'épaisseur de 114 $\mu$m donne 70,7 g/m²

On voit que dans cet essai, si l'on ramène l'épaisseur du papier à une valeur commune de 114 $\mu$m, on gagne 4,3 g/m² ou 5,7 % du poids du papier ce qui signifie une économie importante en terme d'environnement.

Les résultats de mesure de la longueur de rupture, déterminés selon la norme DIN EN ISO 1924-2 incluant la norme DIN 53112-1, sont :

- Pour l'échantillon de départ, témoin (essai n° 11 à une charge de pigment de 25 %) : 2,30 km
- Pour l'échantillon d'essai à une charge de pigment de 25 % : 2,48 km ce qui signifie un accroissement de la longueur de rupture de 8,7 % par rapport au produit non traité, à 75 g/m$^2$.

En outre, la résistance à la traction, déterminée selon la norme DIN EN ISO 1924-2, pour une taille de 15 mm est de 27,3 N pour l'essai contre seulement 24,5 N pour le témoin.

L'opacité déterminée , selon le même mode opératoire que celui de l'essai n° 2 et selon la norme DIN 53 146, est 87,7.

La blancheur déterminée , selon le même mode opératoire que celui de l'essai n° 2 et selon la norme ISO Brightness R 457 filtre Tappi, est 89,0.

Ce même échantillon d'essai est ensuite couché sur un papier à base bois de 53 $\mu$m d'épaisseur et de grammage égal à 32,9 g/m2 $\pm$ 0,39 %, à l'aide d'une coucheuse de laboratoire ( Helicoater de Dixon).

Une tête "dwell" courte est utilisée avec un angle de lame de 45°. La vitesse du couchage est de 800 m/s.

Les sauces de couchages mises en oeuvre ont une composition comprenant 100 pph du pigment à tester, 12 pph de latex (DL 966 de type styrène/butadiène) et 0,5 pph de carboxyméthyl cellulose (Finnfix FF5) et une teneur en matière sèche de 56,6 %.

Les résultats obtenus sont :

- Epaisseur du papier non couché : 53 $\mu$m
- Epaisseur du papier couché à 7 g/m$^2$ pour le témoin de l'essai n° 13: 56 $\mu$m
- Epaisseur du papier couché à 7 g/m$^2$ pour le présent essai, selon l'invention: 59 $\mu$m
- Epaisseur du couchage à 7 g/m$^2$ pour le témoin de l'essai n° 13: 3 $\mu$m
- Epaisseur du couchage à 7 g/m2 pour le présent essai: 6 $\mu$m.

Ces résultats permettent de constater que l'épaisseur du couchage peut être augmentée d'un facteur 2 par rapport au témoin.

**Exemple 3 :**

Cet exemple concerne l'utilisation en impression à jet d'encre ("ink jet") d'un carbonate de calcium, traité ou non traité, employé comme charge de masse 5 ("filler") du papier.

On dilue 0,5 kg, calculé en pigment sec, de carbonate de calcium naturel de type marbre norvégien, de granulométrie telle que 75 % en poids des particules ont un diamètre inférieur à 1 micromètre, mesurée au moyen du Sedigrah 5100(TM) de la société Micromeritics(TM), sous forme de gâteau de filtration, jusqu'à l'obtention d'un slurry d'une concentration en matière sèche de 15 % en poids, par de l'eau distillée, dans le conteneur de 10 litres. Puis on traite le slurry ainsi formé par 10 % d'acide phosphorique en solution à 10 % en poids, à 65°C sous agitation pendant 20 minutes, à 500 tours par minute. Après 15 minutes, on fait barboter du $CO_2$ au travers de la suspension de carbonate de calcium durant 1 heure.

Le barbotage terminé, on forme les feuilles de papier contenant, comme charge, la suspension encore appelée le slurry de carbonate de calcium à tester.

Pour ce faire, on réalise les feuilles de papier à partir d'une pulpe ou pâte de cellulose de degré SR 23 contenant une pâte au sulfate de bois et des fibres constituées à 80 % de bouleau et 20 % de pin. On dilue alors 45 g sec de cette pulpe ou pâte dans 10 litres d'eau en présence d'environ 15 g de la composition de charges à tester pour obtenir expérimentalement une teneur de charge de 20 % à 0,5 % près. Après 15 minutes d'agitation et l'ajout de 0,06 % en poids sec par rapport au poids sec de papier, d'un agent rétenteur du type polyacrylamide, on forme une feuille de grammage égal à 75 g/m$^2$ et chargée à (20 $\pm$0,5 %). Le dispositif mis en oeuvre pour former la feuille est un système Rapid-Kôthen modèle 20.12 MC de la société Haage.

Les feuilles ainsi formées sont séchées pendant 400 secondes à 92°C et un vide de 940 mbar.

La teneur en charge est contrôlée par analyse des cendres.

La feuille ainsi formée, on en mesure l'épaisseur. L'épaisseur du papier ou de la feuille de carton représente la distance perpendiculaire entre les deux surfaces parallèles.

Les échantillons sont conditionnés durant 48 heures (norme allemande DIN EN 20187).

Cette norme précise que le papier est une substance hygroscopique et, en tant que telle, présente la caractéristique d'être capable d'adapter sa teneur en humidité afin de la rendre appropriée par rapport à celle de l'air environnant. L'humidité est absorbée lorsque l'air ambiant subit une augmentation d'humidité et est au contraire évacuée lorsque air ambiant subit une diminution d'humidité.

Même si l'humidité relative reste à un niveau constant, la teneur en humidité du papier ne reste pas nécessairement égale si la température n'est pas maintenue constante dans certaines limites. Lors d'une augmentation ou d'une diminution de la teneur en humidité, les propriétés physiques du papier sont modifiées.

Pour cette raison, on doit conditionner les échantillons durant au moins une période de 48 heures, jusqu'à ce que l'on atteigne un équilibre. Les échantillons sont également testés sous des conditions climatiques identiques.
Le climat d'essai pour le papier a été établi de manière à correspondre aux données suivantes :

Humidité relative 50 % ( $\pm$ 3)

Température 23°C ( $\pm$ 1)

L'épaisseur est déterminée selon la norme allemande DIN EN 20534 en utilisant un micromètre dont l'impression d'essai ("test print") s'élève à 10 n/cm$^2$. Le résultat d'essai est déterminé par un calcul de moyenne sur 10 mesures. Le résultat est exprimé en micromètres. Le témoin est un papier fabriqué en parallèle de la même façon, avec la même quantité de charge, mais non traitée, à 75 g/m$^2$ et avec le même "batch" (même lot) de cellulose.
Résultats :

a) Pigment :

12 heures après le traitement du carbonate de calcium naturel, comme dans cet exemple, le pH du slurry (de la pâte) était 7,2, ce qui signifie aucune stabilité acide.

b) Papier :

Les résultats de mesure d'épaisseur sont :

- Pour l'échantillon de départ, témoin : 112 microns à 75 g/m$^2$.
- Pour l'échantillon d'essai : 120 microns à 75 g/m$^2$, ce qui ramené à une valeur d'épaisseur de 112 microns donne 70 g/m$^2$.

On voit que dans cet essai, si l'on ramène l'épaisseur du papier à une valeur commune de 112 microns, on gagne 5 g/m$^2$ ou 6,6 % du poids du papier ce qui signifie une économie importante en terme d'environnement.
Caractéristiques d'impression :

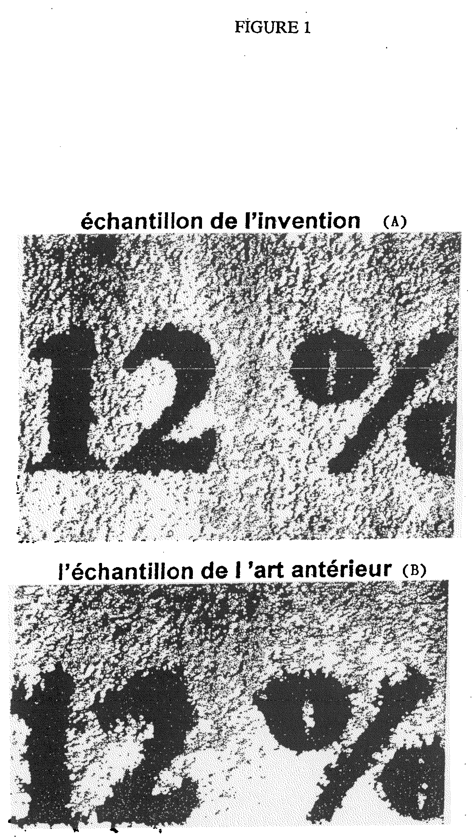

Si l'on effectue une impression par jet d'encre en comparant un produit de l'art antérieur (Figure unique, B) et selon cet essai selon l'invention (Figure unique, A) sur une imprimante à jet d'encre de marque EPSON™ Stylus COLOR 500™, on voit que l'impression selon l'invention est beaucoup plus nette.

Les figures citées ci-dessus se retrouvent en annexe.

**Exemple 4 :**

Cet exemple concerne l'utilisation en impression à jet d'encre ("ink jet") d'un carbonate de calcium, traité ou non traité, employé comme couchage du papier, et comme charge de masse.
On dilue 0,5 kg, calculés en pigment sec, de carbonate de calcium naturel de type marbre norvégien, de granulométrie telle que 75 % en poids des particules ont un diamètre inférieur à 1 micron, mesurée au moyen du Sedigrah 5100™ de la société Micromeritics™, sous forme de gâteau de filtration, jusqu'à l'obtention d'un slurry d'une concentration en matière sèche de 15 % en poids, par de l'eau distillée, dans le conteneur de 10 litres. Puis on traite le slurry ainsi formé par 10 % d'acide phosphorique en solution à 10 % en poids, à 65°C sous agitation pendant 20 minutes, à 500 tours par minute. Après 15 minutes, on fait barboter du $CO_2$ au travers de la suspension de carbonate de calcium durant 1 heure.
Protocole de couchage :

on utilise le même protocole que dans l'essai 27 ci-dessus, à savoir que l'échantillon d'essai est ensuite couché sur un papier à base bois de 53 $\mu$m d'épaisseur et de grammage égal à 32,9 g/m$^2$ $\pm$ 0,39 %, à l'aide d'une coucheuse de laboratoire (Helicoater™ de Dixon™).

Une tête "dwell" courte est utilisée avec un angle de lame de 45°. La vitesse du couchage est de 800 m/s.
Les sauces de couchages mises en oeuvre ont une composition comprenant 100 pph du pigment à tester, 12 pph de latex (DL 966 de type styrène/butadiène) et 0,5 pph de carboxyméthyl cellulose (Finnfix FF5 (TM)) et une teneur en matière sèche de 56,6 %.

Les échantillons sont conditionnés durant 48 heures (norme allemande DIN EN 20187). Cette norme précise que le papier est une substance hygroscopique et, en tant que telle, présente la caractéristique d'être capable d'adapter sa teneur en humidité afin de la rendre appropriée par rapport à celle de l'air environnant. L'humidité est absorbée lorsque l'air ambiant subit une augmentation d'humidité et est au contraire évacuée lorsque l'air ambiant subit une diminution d'humidité. Même si l'humidité relative reste à un niveau constant, la teneur en humidité du papier ne reste pas nécessairement égale si la température n'est pas maintenue constante dans certaines limites. Lors d'une augmentation ou d'une diminution de la teneur en humidité, les propriétés physiques du papier sont modifiées. Pour cette raison, on doit conditionner les échantillons durant au moins une période de 48 heures, jusqu'à ce que l'on atteigne un équilibre. Les échantillons sont également testés sous des conditions climatiques identiques.

Le climat d'essai pour le papier a été établi de manière à correspondre aux données suivantes :

Humidité relative 50 % ( $\pm 3$)
Température 23°C ($\pm$ 1)

L'épaisseur est déterminée selon la norme allemande DIN EN 20534 en utilisant un micromètre dont l'impression d'essai ("test print") s'élève à 10 n/cm$^2$. Le résultat d'essai est déterminé par un calcul de moyenne sur 10 mesures. Le résultat est exprimé en micromètres. Le témoin est un papier fabriqué en parallèle de la même façon, avec la même quantité de charge, mais non traitée, à 75 g/m$^2$ et avec le même "batch" (même lot) de cellulose.

Résultats :

a) Pigment :

12 heures après le traitement du carbonate de calcium naturel, comme dans cet exemple, le pH du slurry (de la pâte) était 7,2, ce qui signifie aucune stabilité acide.

b) Papier :

Les résultats de mesure d'épaisseur sont :

- Pour l'échantillon de départ, témoin : 112 microns à 75 g/m$^2$.
- Pour l'échantillon d'essai : 120 microns à 75 g/m$^2$, ce qui ramené à une valeur d'épaisseur de 112 microns donne 70 g/m$^2$.

On voit que dans cet essai, si l'on ramène l'épaisseur du papier à une valeur commune de 112 microns, on gagne 5 g/m$^2$ ou 6,6 % du poids du papier ce qui signifie une économie importante en terme d'environnement. Des mesures de densités d'impression ont été effectuées selon le mode opératoire qui suit, et les résultats sont rassemblés dans le Tableau I suivant.

La densité optique est une mesure de la densité de réflexion d'une image. Selon un mode opératoire mis principalement au point par le fabricant Hewlett-Packard Corporation (HP)(TM), un motif spécifique est imprimé sur le papier et l'on mesure, à l'aide d'un densitomètre à réflexion (Macbeth RD 918 (TM)), les densités optiques de la couleur noire pure, de la couleur noire composite, et des couleurs cyan, magenta et jaune.
Sauf mention contraire, ce protocole est valable pour tous les exemples comportant cette mesure.

On a effectué les essais dudit Tableau I sur un support papier cellulose ou sur un papier spécial, avec un produit composé de 100 parties de pigment à tester, 15 parties de PVA (alcool polyvinylique), 5 parties d'additif PK-130 de Stockhausen, la charge étant à 70 m$^2$/g de surface spécifique, qualifiée de charge grossière de haute surface spécifique.

Le couchage est effectué à l'aide d'un appareil Erichsen bench coater™ sur un papier tel que défini dans le Tableau I.

Les deux premiers essais du Tableau I correspondent à un papier non couché pigmentaire (collé d'amidon à la surface dans la machine papier).

Les deux suivants correspondent à un papier traité avec de silicates synthétiques. On voit qu'il est obligatoire d'employer un papier spécial pour obtenir une bonne densité optique.

Les deux derniers essais correspondent à un papier couché avec la composition selon l'invention. On voit que l'invention permet, à densité d'impression comparable, d'utiliser un papier normal en impression jet d'encre, et non pas un papier spécial plus coûteux.

En effet, on constate que l'invention est très supérieure au papier non couché (1,40 vs. 1,20 et 1,39 vs. 1,30) et que la valeur de 1,40 obtenue selon l'invention sur un papier normal est absolument comparable à la valeur 1,40 obtenue selon l'art antérieur mais sur un papier spécial.

TABLEAU 1

| MESURES DE DENSITE D'IMPRESSION AU JET D'ENCRE RESULTATS D'ESSAIS : MOYENNE SUR 15 MESURES | | | | | | |
|---|---|---|---|---|---|---|
| *PAPIER* | *IMPRESSION* | *REGLAGES* | *DENSITE D'IMPRESSION B (NOIR)* | *DENSITE D'IMPRESSION C (CYAN)* | *DENSITE D'IMPRESSION M (MAGENTA)* | *DENSITE D'IMPRESSION Y (JAUNE)* |
| *Mühlebach Multiline Top* | *HP deskjet 895 Cxi* | *Papier normal* | 1,92 | 1,38 | 1,40 | 1,30 |
| *Mühlebach Multiline Top* | *Epson Stylus Color 500* | *Papier normal* | 1,74 | 1,50 | 1,28 | 1,20 |
| *Epson Ink Jet Papier 720 dpi* | *HP Deskjet 895 Cxi* | *Papier pour jet d'encre HP à forte brillance (blancheur)* | 1,95 | 1,38 | 1,23 | 1,08 |
| *Epson Ink Jet Papier 720 dpi* | *Epson Stylus Color 500* | *Papier spécialement couché 720 dpi* | 1,94 | 1,80 | 1,55 | 1,44 |
| *Couchage selon l'invention* | *HP deskjet 895 Cxi* | *Papier normal* | 1,94 | 1,57 | 1,59 | 1,39 |
| *Couchage selon l'invention* | *Epson Stylus Color 500* | *Papier normal* | 1,80 | 1,70 | 1,46 | 1,40 |

**Exemple 5 :**

Cet exemple concerne l'utilisation d'un carbonate de calcium, traité ou non traité, de particules grossières mais de surface spécifique élevée, employé comme charge du papier.

Pour ce faire, on dilue 0,5 kg, calculés en pigment sec, de carbonate de calcium naturel de type marbre norvégien, de granulométrie telle que 65 % en poids des particules ont un diamètre inférieur à 1 micromètre, mesurée au moyen du Sedigrah 5100™ de la société Micromeritics™, et une surface spécifique BET de 15,5 m$^2$/g (mesurée selon la méthode BET de la norme ISO 9277) sous la forme d'une dispersion ou slurry de concentration en matière sèche égale 75 % avec un dispersant de type polyacrylate de sodium, puis on a dilué encore avec de l'eau jusqu'à l'obtention d'un slurry d'une concentration en matière sèche de 20 % en poids, dans le conteneur de 10 litres. Puis on traite le slurry ainsi formé par 20 % ou 30 % ou 40 % d'acide phosphorique en solution à 10 % en poids, à 65°. sous légère agitation avec un débit de 30 litre/min. sous pression atmosphérique du fond du conteneur pendant 2 heures. Après 2 heures, on fait barboter du $CO_2$ au travers de la suspension de carbonate de calcium durant 1 heure.

La charge présente les caractéristiques suivantes

**Exemple 5A, acide phosphorique 20 % :**

a) Pour le pigment :

- diamètre moyen de grain, analysé par méthode visuel sous microscope électronique : 7 micromètres
- surface spécifique BET (mesurée selon la méthode BET de la norme ISO 9277) : 38,5 m$^2$/g

b) Pour le papier les mesures d'épaisseur sont :

- Pour l'échantillon de départ, témoin (charge non traitée) : 113 .micro.m à 75 g/m$^2$.
- Pour l'échantillon d'essai : 133 .micro.m à 75 g/m$^2$, ce qui ramené à une valeur d'épaisseur de 113 μm donne 63,7 g/m$^2$.

On voit que dans cet essai, si l'on ramène l'épaisseur du papier à une valeur commune de 113 μm, on gagne 11,3 g/m$^2$ ou 15,0 % du poids du papier ce qui signifie une économie importante en terme d'environnement.

**Exemple 5B acide phosphorique 30 % :**

a) Pour le pigment

- diamètre moyen de grain, analysé par méthode visuel sous microscope électronique : 9 micromètres
- surface spécifique BET (mesurée selon la méthode BET de la norme ISO 9277) : 44,2 m$^2$/g

b) Pour le papier les mesures d'épaisseur sont :

- Pour l'échantillon de départ, témoin (charge non traitée): 113 .micro.m à 75 g/m$^2$.
- Pour l'échantillon d'essai : 139 μm à 75 g/m$^2$, ce qui ramené à une valeur d'épaisseur de 113 μm donne 61,0 g/m$^2$.

On voit que dans cet essai, si l'on ramène l'épaisseur du papier à une valeur commune de 113 μm, on gagne 14,0 g/m$^2$ ou 18,7 % du poids du papier ce qui signifie une économie importante en terme d'environnement.

**Exemple 5C acide phosphorique 40 % :**

a) Pour le pigment :

- diamètre moyen de grain, analysé par méthode visuelle sous microscope électronique : 13 micromètres surface spécifique BET (mesurée selon la méthode BET de la norme ISO 9277) : 58,4 m$^2$/g. b) Pour le papier : les mesures d'épaisseur sont :

- Pour l'échantillon de départ, témoin (charge non traitée): 113 .micro.m à 75 g/m$^2$.
- Pour l'échantillon d'essai: 152 .micro.m à 75 g/m$^2$, ce qui ramené à une valeur d'épaisseur de 113 $\mu$m donne 55,7 g/m$^2$.

On voit que dans cet essai, si l'on ramène l'épaisseur du papier à une valeur commune de 113 $\mu$m, on gagne 19,3 g/m$^2$ ou 257 % du poids du papier ce qui signifie une économie importante en terme d'environnement.

**Exemple 6 :**

Cet exemple concerne un procédé de fabrication du produit selon l'invention en continu et l'utilisation d'un carbonate de calcium, traité ou non traité, de particules grossières mais de surface spécifique BET élevée, employé comme charge du papier.
Pour ce faire, on dilue 100 kg, calculés en pigment sec, de carbonate de calcium naturel de type marbre norvégien, de granulométrie telle que 65 % en poids des particules ont un diamètre inférieur à 1 micromètre, mesurée au moyen du Sedigrah 5100™ de la société Micromeritics™, et une surface spécifique BET de 15.5 m$^2$/g (mesurée selon la méthode BET de la norme ISO 9277) sous la forme d'une dispersion ou slurry de concentration en matière sèche égale à 75 % avec un dispersant du type polyacrylate de sodium, avec de l'eau jusqu'à l'obtention d'un slurry d'une concentration en matière sèche de 10 % en poids, dans le conteneur de 3000 litres. Puis on traite le slurry ainsi formé par 10 % ou 20 % ou 30 % d'acide phosphorique en solution à environ 15 % en poids, à 65°C en continu dans 4 cellules de 25 litres dosant (x)/ de l'acide phosphorique dans chaque cellule sous légère agitation et avec un débit de 50 litres/min sous pression atmosphérique du fond de chaque cellule. La rétention du produit dans chacune des cellules était de 15 min.
La charge présente les caractéristiques suivantes :

**Exemple 6A, acide phosphorique 10,0 % :**

a) Pour le pigment
Concentration du slurry : 7,8 %

- diamètre moyen de grain, mesurée au moyen du Sedigrah 5100™ de la société Micromeritics™, 1,7 micromètres
- surface spécifique BET (mesurée selon la méthode BET de la norme ISO 9277) 36,0 m$^2$/g.

b) Pour le papier les mesures d'épaisseur sont :

- Pour l'échantillon de départ, témoin (charge non traitée) : 113 $\mu$m à 75 g/m$^2$.

- Pour l'échantillon d'essai : 123 $\mu$m à 75 g/m$^2$, ce qui ramené à une valeur d'épaisseur de 113 $\mu$m donne 68,9 g/m$^2$.

On voit que dans cet essai, si l'on ramène l'épaisseur du papier à une valeur commune de 113 $\mu$m, on gagne 6,1 g/m$^2$ ou 8,1 % du poids du papier ce qui signifie une économie importante en terme d'environnement.

**Exemple 6B acide phosphorique 19,1 % :**

a) Pour le pigment : Concentration du slurry : 7,8 %

- diamètre moyen de grain analysé par méthode visuel sous microscope électronique : 12 micromètres
- surface spécifique BET : (mesurée selon la méthode BET de la norme ISO 9277) 49,9 m$^2$/g.

b) Pour le papier : les mesures d'épaisseur sont :

- Pour l'échantillon de départ, témoin (charge non traitée) : 113 .micro.m à 75 g/m$^2$.
- Pour l'échantillon d'essai : 135 $\mu$m à 75 g/m$^2$, ce qui ramené à une valeur d'épaisseur de 113 $\mu$m donne 62,8 g/m$^2$.

On voit que dans cet essai, si l'on ramène l'épaisseur du papier à une valeur commune de 113 $\mu$m, on gagne 12.2 g m$^2$ ou 16,6 % du poids du papier ce qui signifie une économie importante en terme d'environnement.

**Exemple 6C acide phosphorique 30 % :**

a) Pour le pigment : Concentration du slurry :17,9 %

- diamètre moyen de grain analysé par méthode visuelle sous microscope électronique : 12 micromètres
- surface spécifique BET (mesurée selon la méthode BET de la norme ISO 9277) 45,7 m$^2$/g

b) Pour le papier : les mesures d'épaisseur sont :

- Pour l'échantillon de départ, témoin (charge non traitée) : 113 $\mu$m à 75 g/m$^2$.

- Pour l'échantillon d'essai : 158 .micro.m à 75 g/m$^2$, ce qui ramené à une valeur d'épaisseur de 113 $\mu$m donne 53,6 g/m$^2$.

On voit que dans cet essai, si l'on ramène l'épaisseur du papier à une valeur commune de 113 $\mu$m, on gagne 21,4 g/$^2$ ou 28,5 % du poids du papier ce qui signifie une économie importante en terme d'environnement.

**Exemple 6 D :**

Cet exemple concerne un procédé de fabrication du produit selon l'invention en continu et l'utilisation d'un carbonate de calcium, traité ou non traité, de particules grossières mais de surface spécifique BET élevée, employé comme charge du papier.

Pour ce faire, on dilue 100 kg, calculés en pigment sec, de carbonate de calcium naturel de type marbre norvégien, de granulométrie telle que 65 % en poids des particules ont un diamètre inférieur à 1 micromètre, mesurée au moyen du Sedigrah 5100™ de la société MiCTomeritics™ et une surface spécifique BET de 15,5 m$^2$/g (mesurée selon la méthode BET de la nonne ISO 9277) sous la forme d'une dispersion ou slurry de concentration en matière sèche égale à 75 % avec un dispersant du type acide polyaspartique de sodium, avec de l'eau jusqu'à l'obtention d'un slurry d'une concentration en matière sèche de 10 % en poids, dans le conteneur de 3000 litres. Puis on traite le slurry ainsi formé par 10 % ou 20 % ou 30 % d'acide phosphorique en solution à environ 15 % en poids, à 65°C en continu dans 4 cellules de 25 litres dosant 1/4 de l'acide phosphorique dans chaque cellule sous légère agitation et avec un débit de 50 litres/min sous pression atmosphérique du fond de chaque cellule. La rétention du produit dans chacune des cellules était de 15 min.

La charge présente les caractéristiques suivantes :

a) Pour le pigment Concentration du slurry : 8.9 %

- diamètre moyen de grain, mesurée au moyen du Sedigrah 5100™ de la société MiCTomeritics™, 1,9 micromètres
- surface spécifique BET (mesurée selon la méthode BET de la norme ISO 9277) 39,1 m$^2$/g.

b) Pour le papier les mesures d'épaisseur sont :

- Pour l'échantillon de départ, témoin (charge non traitée) : 113 $\mu$m à 75 g/m$^2$.

- Pour l'échantillon d'essai : 123 $\mu$m à 75 g/m$^2$, ce qui ramené à une valeur d'épaisseur de 113 $\mu$m donne 68,8 g/m$^2$. On voit que dans cet essai, si l'on ramène l'épaisseur du papier à une valeur commune de 113 $\mu$m, on gagne 6,2 g/m$^2$ ou 8,1 % du poids du papier ce qui signifie une économie importante en terme d'environnement.

**Exemple 7 :**

Cet exemple concerne l'utilisation d'un mélange de carbonate de calcium traité / non traité comme charge de masse du papier.

a) Préparation du pigment traité :

On dilue 0,6 kg, calculés en pigment sec, de carbonate de calcium naturel de type marbre norvégien, de granulométrie telle que 65 % en poids des particules ont un diamètre inférieur à 1 micromètre, mesurée au moyen du Sedigrah 5100™ de la société Micromeritics™, et une surface spécifique BET de 8,4 m$^2$/g (mesurée selon la méthode BET de la norme ISO 9277) sous la forme d'une dispersion ou slurry de concentration en matière sèche égale 20 %, puis on a dilué avec de l'eau jusqu'à l'obtention d'un slurry à une concentration en matière sèche de 10,2 % en poids, dans le conteneur de 1 litre. Puis on traite le slurry ainsi formé par 70 % d'acide phosphorique en solution à 10 % en poids, à 60° sous agitation pendant 1 heure. Après 1 heure, on fait barboter du $CO_2$ au travers de la suspension de carbonate de calcium durant 0,5 heure.

b) La préparation des mélanges de pigment traité et non traité : on mélange sous agitation pendant 15 min.

les charges présentent les caractéristiques suivantes :

**Exemple 7A, 100 % du pigment traité :**

a) Pour le pigment :

-	granulométrie telle que 21 % en poids des particules ont un diamètre inférieur à 1 micromètre, mesurée au moyen du Sedigrah 5100™ de la société Micromeritics™,
-	surface spécifique BET (mesurée selon la méthode BET de la norme ISO 9277) 44,5 m$^2$/g.

b) Pour le papier :

les mesures d'épaisseur sont :

-	Pour l'échantillon de départ, témoin (charge non traitée) : 115 $\mu$m à 75 g/m$^2$.
-	Pour l'échantillon d'essai : 162 .micro.m à 75 g/m$^2$, ce qui ramené à une valeur d'épaisseur de 115 $\mu$m donne 52,2 g/m$^2$.

On voit que dans cet essai, si l'on ramène l'épaisseur du papier à une valeur commune de 115 $\mu$m, on gagne 22,7 g/m$^2$ ou 30,3 % du poids du papier ce qui signifie une économie importante en terme d'environnement.

**Exemple 7B, 21,5 % du pigment traité de l'exemple 7A et 78.5 % du pigment non traité :**

Résultat :

a) Pour le pigment :

-	granulométrie telle que 63 % en poids des particules ont un diamètre inférieur à 1 micromètre, mesurée au moyen du Sedigrah 5100™ de la société Micromeritics
-	surface spécifique BET (mesurée selon la méthode BET de la norme ISO 9277) 15.5 m$^2$/g

b) Pour le papier : les mesures d'épaisseur sont :

-	Pour l'échantillon de départ, témoin (charge non traitée) : 115 $\mu$m à 75 g/m$^2$.
-	Pour l'échantillon d'essai : 124 $\mu$m à 75 g/m$^2$, ce qui ramené à une valeur d'épaisseur de 115 $\mu$m donne 69,5 g/m$^2$. On voit que dans cet essai, si l'on ramène l'épaisseur du papier à une valeur commune de 115 $\mu$m, on gagne 5,5 g/m$^2$ ou 7,3 % du poids du papier ce qui signifie une économie importante en terme d'environnement.

**Exemple 7C, 35,5 % du pigment traité de l'exemple 7A et 64,5 % de pigment non traité :**

a) Pour le mélange de pigments :

-	granulométrie telle que 60,0 % en poids des particules ont un diamètre inférieur à 1 micromètre, mesurée au moyen du Sedigrah 5100™ de la société Micromeritics

-	surface spécifique BET (mesurée selon la méthode BET de la norme ISO 9277) 20,0 m$^2$/g.

b) Pour le papier : les mesures d'épaisseur sont :

- Pour l'échantillon de départ, témoin (charge non traitée) : 115 $\mu$m à 75 g/m$^2$.

- Pour l'échantillon d'essai : 130 $\mu$m à 75 g/m$^2$, ce qui ramené à une valeur d'épaisseur de 115 $\mu$m donne 66,3 g m$^2$.

On voit que dans cet essai, si l'on ramène l'épaisseur du papier à une valeur commune de 115 $\mu$m, on gagne 8,7 g/m$^2$ ou 11,6 % du poids du papier ce qui signifie une économie importante en terme d'environnement.

**Exemple 7D, 50,0 % du pigment traité de l'exemple 7A et 50,0 % de pigment non traité :**

a) Pour le mélange de pigments :

- granulométrie telle que 42,0 % en poids des particules ont un diamètre inférieur à 1 micron, mesurée au moyen du Sedigrah 5100(TM) de la société Micromeritics - surface spécifique BET (mesurée selon la méthode BET de la norme ISO 9277) 28,0 m$^2$/g.

b) Pour le papier : les mesures d'épaisseur sont :

- Pour l'échantillon de départ, témoin (charge non traitée) : 115 $\mu$m à 75 g/m$^2$.
- Pour l'échantillon d'essai : 137 $\mu$m à 75 g m$^2$, ce qui ramené à une valeur d'épaisseur de 115 $\mu$m donne 62,9 g/m$^2$.

On voit que dans cet essai, si l'on ramène l'épaisseur du papier à une valeur commune de 115 $\mu$m, on gagne 12,1 g/m$^2$ ou 16,0 % du poids du papier ce qui signifie une économie importante en terme d'environnement.

**Exemple 8 :**

Cet exemple concerne l'utilisation en peinture d'un carbonate de calcium traité ou non traité.

Pour ce faire, on dilue 5 tonnes, calculées en pigment sec, de carbonate de calcium naturel de type marbre norvégien, de granulométrie telle que 70 % en poids des particules ont un diamètre inférieur à 1 $\mu$m, mesurée au moyen du Sedigraph 5100 de la société Micromeritics, sous forme de gâteau de filtration, jusqu'à l'obtention d'un slurry d'une concentration en matière sèche de 25 % en poids, par de l'eau distillée, dans le conteneur de 45 m$^3$. Puis on traite le slurry ainsi formé au moyen d'acide phosphorique en solution à 10 % en poids correspondant à 0,20 mole de $H_3O^+$ par mole de $CaCO_3$, à 60°C et sous agitation pendant 2 heures à 200 tours par minute.

Après 2 heures, on fait barboter du $CO_2$ avec une surpression de 50mbar au travers de la suspension de carbonate de calcium durant 5 heures, de telle sorte que le rapport volume de la suspension : volume de $CO_2$ gazeux soit égal à environ 1 : 0,15. Après 24 heures de stockage, on sèche le slurry par spray dryer et forme d'une peinture d'émulsion contenant, comme partie de charge, le carbonate de calcium sec à tester.

Procédure pour préparer la peinture :

Dans un disperseur de 1 m$^3$ on prépare la peinture en dispersant, dans l'eau, les additifs et les pigments pendant 10 min. sous une agitation à 3000 tours/minute puis on réduit la vitesse à 1000 tours/minute et on ajoute le latex. On disperse encore pendant 10 min.

**Formulation de peinture :**

| Formulation A, base 10% TiO$_2$ | | kg | base | -15% TiO$_2$ | -30% TiO$_2$ |
|---|---|---|---|---|---|
| Mowilith LDM 1871 ca.53% | | kg | 147.0 | 147.0 | 147.0 |
| Tiona RCL-535 | | kg | 180.0 | 153.0 | 126.0 |
| Charge | | kg | 0.0 | 27.0 | 54.0 |
| OMYACARB 2-GU | | kg | 107.0 | 107.0 | 107.0 |
| FINNTALC M 50 | | kg | 50.0 | 50.0 | 50.0 |
| OMYACARB 10-GU | | kg | 108.0 | 108.0 | 108.0 |
| CALCIMATT | | kg | 70.0 | 70.0 | 70.0 |

(suite)

| Formulation A, base 10% $TiO_2$ | | kg | base | -15% $TiO_2$ | -30% $TiO_2$ |
|---|---|---|---|---|---|
| Coatex BR 910 G, 10% | | kg | 48.5 | 48.5 | 48.5 |
| Coatex P 50 | | kg | 3.0 | 3.0 | 3.0 |
| Mergal K 15 | | kg | 2.0 | 2.0 | 2.0 |
| Calgon N | | kg | 1.0 | 1.0 | 1.0 |
| NaOH, 10% | | kg | 2.0 | 2.0 | 2.0 |
| Byk 032 | | kg | 3.0 | 3.0 | 3.0 |
| Tylose MH 30 000 YG8 | | kg | 3.0 | 3.0 | 3.0 |
| Eau déionisée | | kg | 275.5 | 275.5 | 275,5 |
| Total | | | 1000.0 | 1000.0 | 1000.0 |
| | | | | | |
| Données de formulation | | | | | |
| | | | | | |
| PVC | | % | 71.0 | 71.5 | 71.9 |
| Densité solide | | g/cm$^3$ | 2.48 | 2.44 | 2.41 |
| Densité liquide | | g/cm$^3$ | 1.56 | 1.55 | 1.55 |
| Volume solide par litre | | ml/l | 369 | 372 | 375 |
| Volume solide par kg | | m/kg | 236 | 239 | 243 |
| Teneur en solide | | % | 60.3 | 60.3 | 60.3 |
| Pigment/liantrapport solide | | | 6.61 :1 | 6.61 :1 | 6.61 :1 |

Les résultats de peinture sont, le témoin étant une peinture en émulsion aqueuse avec 18 % de $TiO_2$ :

|  Blancheur (DIN 53140) | (Témoin) | | |
|---|---|---|---|
| | 18 % TiO | 15,3 % $TiO_2$ | 12,6 % $TiO_2$ |
| (l'épaisseur liquide 300$\mu$m) | | | |
| Ry sur blanc | 90,8 % | 91,1 % | 91,2 % |
| Ry sur noir | 89,2 % | 89,6% | 89,7 % |
| Opacité (ISO 2814) | 98,3 % | 98,4% | 98,4% |
| Ry sur noir /Ry sur blanc 100 | | | |

La blancheur et l'opacité du témoin et identique avec les deux essai inventif avec -15% et - 30% de piment $TiO_2$

|  L'épaisseur du film sec | 104 $\mu$m | 113 $\mu$m | 112 $\mu$m |
|---|---|---|---|
| Poids de film sec | 177 g/m$^2$ | 166 g/m$^2$ | 163 g/m$^2$ |

On voit que dans cet essai pour réaliser une épaisseur de 104 $\mu$m comme le témoin, le poids d'un film avec le carbonate de calcium selon l'invention est seulement 153 g/m$^2$ et 151 g/m$^2$ respectivement contre 177 g/m$^2$, et si l'on ramène l'épaisseur de la peinture à une valeur commune de 104 $\mu$m, on gagne 24 g/m et 26 g/m$^2$ respectivement ou 13,5 % et 14,7 % respectivement du poids de la peinture ce qui signifie une économie importante en terme d'environnement.

**Revendications**

1. **Procédé de traitement de pigments,** charges ou minéraux, en suspension aqueuse, contenant un carbonate naturel permettant la réduction en poids du papier à surface constante, **caractérisé en ce que**

   - ledit pigment est traité par une combinaison d'un ou plusieurs donneurs d'ions $H_3O^+$ moyennement forts à forts et du $CO_2$ gazeux et **en ce que**
   - il est constitué des 3 étapes suivantes :

      a) Le traitement avec le ou les donneurs d'ions $H_3O^+$ moyennement forts à forts
      b) Le traitement avec le $CO_2$ gazeux, que ce traitement soit partie intégrante de l'étape a), qu'il soit effectué parallèlement à l'étape a) ou qu'il soit effectué après l'étape a)
      c) La remontée du pH, mesuré à 20°C, au delà de 7,5, dans un intervalle de temps après la fin des étapes a) et b) compris entre 1 heure et 10 heures, préférentiellement entre 1 heure et 5 heures sans l'ajout d'une base, ou immédiatement après la fin des étapes a) et b) avec l'ajout d'une base, l'étape c) étant la dernière étape du procédé et

   - **en ce que** le pigment, la charge ou le minéral après l'étape c) présente une surface spécifique BET, mesurée selon la norme ISA 9277, comprise entre 20 et 80 $m^2/g$.

2. Procédé de traitement de pigments, charges ou minéraux, en suspension aqueuse, contenant un carbonate naturel permettant la réduction en poids du papier à surface constante selon la revendication 1, **caractérisé en ce que** le $CO_2$ gazeux provient d'une alimentation externe en $CO_2$, d'une recirculation du $CO_2$ ou bien de l'ajout en continu du même donneur d'ions $H_3O^+$ moyennement fort à fort que celui ayant servi au traitement ou encore d'un autre donneur d'ions $H_3O^+$ moyennement fort à fort ou encore d'une surpression en $CO_2$ préférentiellement comprise entre $0,05 \times 10^5$ Pa et $5 \times 10^5$ Pa.

3. Procédé de traitement de pigments, charges ou minéraux, en suspension aqueuse, contenant un carbonate naturel permettant la réduction en poids du papier à surface constante selon la revendication 1 ou 2, **caractérisé en ce que** les étapes a) et b) peuvent être répétées plusieurs fois.

4. Procédé de traitement de pigments, charges ou minéraux, en suspension aqueuse, contenant un carbonate naturel permettant la réduction en poids du papier à surface constante selon l'une des revendications 1 à 3, **caractérisé en ce que** le pH, mesuré à 20°C, est compris entre 3 et 7,5 pendant les étapes a) et b) du traitement et **en ce que** la température du traitement est comprise entre 5°C et 90°C, et préférentiellement entre 45°C et 60°C.

5. Procédé de traitement de pigments, charges ou minéraux, en suspension aqueuse, contenant un carbonate naturel permettant la réduction en poids du papier à surface constante selon l'une des revendications 1 à 4, **caractérisé en ce que** la concentration en $CO_2$ gazeux dans la suspension est, en volume, telle que le rapport (volume de la suspension : volume de $CO_2$ gazeux) est compris entre 1 : 0,05 et 1 : 20 avec ledit rapport compris entre 1 : 1 et 1 : 20 dans l'étape a) et entre 1 : 0,05 et 1 : 1 dans l'étape b).

6. Procédé de traitement de pigments, charges ou minéraux, en suspension aqueuse, contenant un carbonate naturel permettant la réduction en poids du papier à surface constante selon la revendication 5, **caractérisé en ce que** la concentration en $CO_2$ gazeux dans la suspension est, en volume, telle que le rapport ( volume de la suspension : volume de $CO_2$ gazeux ) est compris entre 1 : 0,05 et 1 : 10 avec ledit rapport compris entre 1 : 0,5 et 1 : 10 dans l'étape a) et entre 1 : 0,05 et 1 : 1 dans l'étape b).

7. Procédé de traitement de pigments, charges ou minéraux, en suspension aqueuse, contenant un carbonate naturel permettant la réduction en poids du papier à surface constante selon l'une des revendications 1 à 6, **caractérisé en ce que** la durée de l'étape b) du traitement dure de 0 heure à 10 heures et préférentiellement de 2 heures à 6 heures.

8. Procédé de traitement de pigments, charges ou minéraux, en suspension aqueuse, contenant un carbonate naturel permettant la réduction en poids du papier à surface constante selon l'une des revendications 1 à 7, **caractérisé en ce que** le pigment, charge ou minéral contenant un carbonate naturel est choisi parmi le carbonate de calcium naturel ou un carbonate contenant une dolomie et leurs mélanges avec du talc, et/ou du kaolin, et/ou de l'oxyde de titane $TiO_2$, de l'oxyde de magnésium MgO, et autres minéraux inertes vis à vis des donneurs d'ions $H_3O^+$ moyen-

nement forts à forts bien connus dans le domaine du papier.

9. Procédé de traitement de pigments, charges ou minéraux, en suspension aqueuse, contenant un carbonate de calcium naturel permettant la réduction en poids du papier à surface constante selon la revendication 8, **caractérisé en ce que** le carbonate de calcium naturel est choisi parmi un marbre, une calcite ou une craie ou un carbonate contenant une dolomie.

10. Procédé de traitement de pigments, charges ou minéraux, en suspension aqueuse, contenant un carbonate naturel permettant la réduction en poids du papier à surface constante selon l'une des revendications 1 à 9, **caractérisé en ce que** le ou les donneurs d'ions $H_3O^+$ forts sont choisis parmi l'acide chlorhydrique ou l'acide sulfurique et **en ce que** le ou les donneurs d'ions $H_3O^+$ moyennement forts sont choisis parmi $H_2SO_3$, $HSO_4^-$, $H_3PO_4$ ou l'acide oxalique ou leurs mélanges.

11. **Procédé de fabrication de suspension aqueuse de pigments, charges ou minéraux,** en suspension aqueuse, contenant un carbonate naturel, **caractérisé en ce que**, après les trois étapes du procédé de traitement selon l'une quelconque des revendications 1 à 10, il est mis en oeuvre un agent dispersant et éventuellement une étape de reconcentration.

12. **Suspension aqueuse d'un ou plusieurs pigments, charges ou minéraux** contenant éventuellement un agent polymère dispersant comme stabilisant de rhéologie de la suspension, lesdits pigments permettant la réduction en poids du papier à surface constante, **caractérisée en ce que** :

   a) elle contient un carbonate naturel et le ou les produits de réaction dudit carbonate avec du $CO_2$ gazeux et le ou les produits de réaction dudit carbonate avec un ou plusieurs donneurs d'ions $H_3O^+$ moyennement forts à forts et
   b) elle a un pH supérieur à 7,5 mesuré à 20°C.

13. Suspension aqueuse selon la revendication 12 **caractérisée en ce que** le carbonate naturel est un carbonate de calcium naturel et préférentiellement un marbre, une calcite, une craie ou un carbonate contenant une dolomie.

14. Suspension aqueuse selon l'une des revendications 12 13 **caractérisée en ce que** le ou les donneurs d'ions $H_3O^+$ forts sont choisis parmi l'acide chlorhydrique ou l'acide sulfurique ou leurs mélanges et **en ce que** le ou les donneurs d'ions $H_3O^+$ moyennement forts sont choisis parmi $H_2SO_3$, $HSO_4^-$, $H_3PO_4$, l'acide oxalique ou leurs mélanges.

15. Suspension aqueuse selon l'une des revendications 12 à 14 **caractérisée en ce que** la quantité en mole de donneurs d'ions $H_3O^+$ moyennement forts à forts par rapport au nombre de moles de $CaCO_3$ est au total comprise entre 0,1 et 2, préférentiellement entre 0,25 et 1.

16. Suspension aqueuse selon l'une des revendications 12 à 15 **caractérisée en ce que** le pigment, la charge ou le minéral a une surface spécifique BET, mesurée selon la norme ISO 9277, comprise entre 5 $m^2/g$ et 200 $m^2/g$, préférentiellement entre 20 $m^2/g$ et 80 $m^2/g$ et très préférentiellement entre 30 $m^2/g$ et 60 $m^2/g$.

17. Suspension aqueuse selon l'une des revendications 12 à 16 **caractérisée en ce que** le pigment, la charge ou le minéral présente les caractéristiques suivantes:

   un diamètre moyen de grain, mesuré par la méthode par sédimentation sur appareil Sedigraph 5100™ compris entre 50 et 0,1 micromètre
   et une surface spécifique BET, mesurée selon la norme ISO 9277, comprise entre 15 et 200 $m^2/g$,
   et caractérisée de préférence **en ce que** le pigment, la charge ou le minéral présente les caractéristiques suivantes :

   un diamètre moyen de grain, mesuré par la méthode par sédimentation sur appareil Sedigraph 5100™ compris entre 25 et 0,5 micromètre
   et une surface spécifique BET, mesurée selon la norme ISO 9277, comprise entre 20 et 80 $m^2/g$,

18. Suspension aqueuse selon la revendication 17 **caractérisée en ce que** le pigment, la charge ou le minéral présente les caractéristiques suivantes :

un diamètre moyen de grain, mesuré par la méthode par sédimentation sur appareil Sedigraph 5100™ compris entre 7 et 0,7 micromètre

et une surface spécifique BET, mesurée selon la norme ISO 9277, comprise entre 30 et 60 $m^2$/g,

19. Suspensions aqueuses d'un ou plusieurs pigments, charges ou minéraux contenant un carbonate naturel permettant la réduction en poids du papier à surface constante selon l'une quelconque des revendications 12 à 18, **caractérisées en ce que** le pigment, charge ou minéral contenant un carbonate naturel est choisi parmi le carbonate de calcium naturel ou un carbonate contenant une dolomie et leurs mélanges avec du talc, et/ou du kaolin, et/ou de l'oxyde de titane $TiO_2$, de l'oxyde de magnésium MgO, et autres minéraux inertes vis à vis des donneurs d'ions $H_3O^+$ moyennement forts à forts bien connus dans le domaine du papier.

20. **Pigment, charge ou minéral à l'état sec, caractérisé en ce qu'**il est obtenu par séchage d'une suspension aqueuse selon l'une quelconque des revendications 12 à 19.

21. **Compositions à usage papetier, caractérisées en ce qu'**elles contiennent au moins une suspension aqueuse selon l'une quelconque des revendications 12 à 19.

22. **Utilisation des suspensions aqueuses** selon l'une quelconque des revendications 12 à 19 pour le couchage du papier.

23. Utilisation des suspensions aqueuses selon l'une quelconque des revendications 12 à 19 comme charge de masse du papier.

24. Utilisation simultanée des suspensions aqueuses selon l'une quelconque des revendications 12 à 19 comme charge de masse du papier et sauce de couchage et/ou pigmentation de la surface du papier.

25. Utilisation des suspensions aqueuses selon la revendication 23 **caractérisée en ce que** le poids du papier fabriqué, à surface constante, est diminué de 3 % à 15 %.

26. Utilisation des suspensions aqueuses selon l'une quelconque des revendications 12 à 19 dans le domaine de la peinture.

27. **Procédé de fabrication d'une feuille de papier, carton ou analogue, caractérisé en ce qu'**il comporte l'incorporation de suspension ou de composition selon l'une quelconque des revendications 12 à 19 et 21, dans le processus de fabrication de la feuille au niveau de la préparation de la pâte épaisse, ou de la pâte diluée, ou à ces deux niveaux en fonction du processus papetier, en une ou plusieurs fois.

28. Procédé de fabrication d'une feuille de papier, carton ou analogue, selon la revendication 27, **caractérisé en ce qu'**il comporte l'incorporation d'une suspension ou d'une composition selon l'une quelconque des revendications 12 à 19 et 21, dans les eaux blanches recyclées, ou dans les " cassés de couchage " également recyclés.

29. Procédé de fabrication d'une feuille de papier, carton ou analogue, selon la revendication 27 ou 28, **caractérisé en ce qu'**on applique le procédé de traitement de pigments, charges ou minéraux, en suspension aqueuse, contenant un carbonate naturel, ou de fabrication de suspension aqueuse de pigments, charges ou minéraux, en suspension aqueuse, contenant un carbonate naturel, selon selon l'une quelconque des revendications 1 à 11 aux eaux blanches ou aux " cassés de couchage" recyclés.

30. Procédé de fabrication d'une feuille de papier, carton ou analogue, selon l'une quelconque des revendications 27 à 29, **caractérisé en ce qu'**on l'applique à la fabrication de papier obtenu à base de fibres de cellulose d'origine bois, comme à base de bois feuillus ou de bois résineux.

31. Procédé de fabrication d'une feuille de papier, carton ou analogue, selon l'une quelconque des revendications 27 à 29, **caractérisé en ce qu'**on l'applique à la fabrication de papier obtenu à partir de fibres ne provenant pas du bois mais au contraire de fibres synthétiques.

32. **Papier, carton ou analogue, caractérisé en ce qu'**il contient une suspension aqueuse selon l'une quelconque des revendications 12 à 19 ou un pigment, charge ou minéral à l'état sec selon la revendication 20.

**33.** Papier selon la revendication 32, pour l'application impression digitale et préférablement impression au jet d'encre.

FÏGURE 1

échantillon de l'invention (A)

l'échantillon de l'art antérieur (B)

Europäisches
Patentamt

European
Patent Office

Office européen
des brevets

**RAPPORT DE RECHERCHE EUROPEENNE**

Numéro de la demande

EP 15 00 3384

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DD 298 372 A (FREIBERG BERGAKADEMIE) 20 février 1992 (1992-02-20) | 11-33 | INV. C09C1/02 |
| A | * le document en entier * | 1-10 | C09C3/06 |
| X | US 5 690 897 A (DRUMMOND DONALD KENDALL) 25 novembre 1997 (1997-11-25) | 11-33 | |
| A | * le document en entier * | 1-10 | |
| X,D | EP 0 445 952 A (PFIZER) 11 septembre 1991 (1991-09-11) | 11-33 | |
| A | * le document en entier * | 1-10 | |
| X | US 5 007 964 A (TSUKISAKA RYOGO [JP] ET AL) 16 avril 1991 (1991-04-16) | 11-33 | |
| A | * le document en entier * | 1-10 | |

**DOMAINES TECHNIQUES RECHERCHES (IPC)**

C09C
C01F

Le présent rapport a été établi pour toutes les revendications

| Lieu de la recherche | Date d'achèvement de la recherche | Examinateur |
|---|---|---|
| Munich | 8 février 2016 | Fortunati, Taddiano |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 15 00 3384

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-02-2016

| Document brevet cité au rapport de recherche | | Date de publication | Membre(s) de la famille de brevet(s) | | Date de publication |
|---|---|---|---|---|---|
| DD 298372 | A | 20-02-1992 | ------- | | ------- |
| US 5690897 | A | 25-11-1997 | AT | 212321 T | 15-02-2002 |
| | | | AU | 709389 B2 | 26-08-1999 |
| | | | AU | 4365596 A | 17-06-1996 |
| | | | BR | 9509796 A | 30-09-1997 |
| | | | CA | 2205599 A1 | 30-05-1996 |
| | | | CN | 1170394 A | 14-01-1998 |
| | | | DE | 69525175 D1 | 14-03-2002 |
| | | | DE | 69525175 T2 | 31-10-2002 |
| | | | DK | 0793621 T3 | 18-03-2002 |
| | | | EP | 0793621 A1 | 10-09-1997 |
| | | | ES | 2170175 T3 | 01-08-2002 |
| | | | FI | 972150 A | 20-05-1997 |
| | | | IL | 116038 A | 16-07-2000 |
| | | | JP | H10509129 A | 08-09-1998 |
| | | | KR | 100419122 B1 | 20-05-2004 |
| | | | NO | 972286 A | 20-05-1997 |
| | | | NZ | 298221 A | 29-03-1999 |
| | | | PL | 320474 A1 | 29-09-1997 |
| | | | PT | 793621 E | 28-06-2002 |
| | | | SK | 61897 A3 | 08-10-1997 |
| | | | US | 5690897 A | 25-11-1997 |
| | | | WO | 9615985 A1 | 30-05-1996 |
| | | | ZA | 9509607 A | 03-04-1996 |
| EP 0445952 | A | 11-09-1991 | AU | 665634 B2 | 11-01-1996 |
| | | | AU | 3870393 A | 05-08-1993 |
| | | | AU | 7276691 A | 10-10-1991 |
| | | | BR | 9100922 A | 05-11-1991 |
| | | | CA | 2035808 A1 | 10-09-1991 |
| | | | DE | 69121605 D1 | 02-10-1996 |
| | | | DE | 69121605 T2 | 06-03-1997 |
| | | | EP | 0445952 A1 | 11-09-1991 |
| | | | ES | 2091866 T3 | 16-11-1996 |
| | | | FI | 911183 A | 10-09-1991 |
| | | | FI | 20002724 A | 12-12-2000 |
| | | | JP | 3127001 B2 | 22-01-2001 |
| | | | JP | H04227665 A | 17-08-1992 |
| | | | MX | 166378 B | 04-01-1993 |
| | | | US | 5043017 A | 27-08-1991 |
| US 5007964 | A | 16-04-1991 | JP | H0511051 B2 | 12-02-1993 |
| | | | JP | H01230424 A | 13-09-1989 |
| | | | US | 5007964 A | 16-04-1991 |

EPO FORM P0460

Pour tout renseignement concernant cette annexe : voir Journal Officiel de l'Office européen des brevets, No.12/82

**EP 3 020 769 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9206038 A
- WO 9632449 A
- WO 9632448 A
- US P5364610 A
- US P5075093 A
- WO 9306038 A
- US P4367207 A
- EP 0406662 A

- US P5043017 A
- US P4219590 A
- US P5230734 A
- WO 9708247 A
- WO 9714847 A
- WO 9820079 A
- US P5164006 A

**Littérature non-brevet citée dans la description**

- Römpp Chemie